# EUROPEAN PATENT APPLICATION

(11) **EP 4 574 522 A1**
(43) Date of publication of application: **25.06.2025**
(21) Application number: 24218988.4
(22) Date of filing: 11.12.2024
(51) Int. Cl.: B60L 3/00

(54) **ADAPTIVE FAST CHARGING OF VEHICULAR BATTERIES**

(30) Priority: 12.12.2023 US 202318536958
(71) Applicant: Volvo Car Corporation, 405 31 Göteborg (SE)
(72) Inventor: LE SAUX, Matthias, 40531 Göteborg (SE); LARSSON, Daniel, 40531 Göteborg (SE); ROPEL, Andreas Martin Viktor, 40531 Göteborg (SE); SINGH, Aditya Pratap, 40531 Göteborg (SE)
(74) Representative: Maiwald GmbH

(57) **Abstract**

Systems/techniques that facilitate adaptive fast charging of vehicular batteries are provided. The system, having a memory that stores computer executable components and a processor that executes the computer executable components stored in the memory. The computer executable components comprise an adaptive charging system that receives one or more factors that impact usage of a battery, a cell allocation determination component that, based on the one or more factors, determines a cell allocation scheme, and a display component that displays the cell allocation scheme comprising an adjustment to the battery and number of cells impacted by the adjustment to the battery.

## Description

### TECHNICAL FIELD

The subject disclosure relates generally to electric charging of vehicles, and more specifically to adaptive fast charging of vehicular batteries.

### BACKGROUND

Many modern vehicles implement fully or partially electric propulsion systems. Such vehicles can be charged via normal charging or fast charging. To save time, drivers often make heavy use of fast charging, at the expense of expedited battery degradation.

Accordingly, systems or techniques that can address one or more of these technical problems can be desirable.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate adaptive fast charging of vehicular batteries are described.

According to one or more embodiments, a method, comprises: receiving, by adaptive charging system, one or more factors that impact usage of a battery; determining, by the system, a cell allocation scheme based on the one or more factors; and displaying, by the system, the cell allocation scheme comprising an adjustment to the battery and number of cells impacted by the adjustment to the battery.

In another embodiment, a system, comprises: a memory that stores computer executable components; and a processor that executes the computer executable components stored in the memory, wherein the computer executable components comprise: an adaptive charging system that receives one or more factors that impact usage of a battery; a cell allocation determination component that, based on the one or more factors, determines a cell allocation scheme; and a display component that displays the cell allocation scheme comprising an adjustment to the battery and number of cells impacted by the adjustment to the battery.

In yet another embodiment, a non-transitory machine-readable medium, comprising executable instructions that, when executed by a processor, facilitate performance of operations, comprises: receiving one or more factors that impact usage of a battery; determining a cell allocation scheme based on the one or more factors; and displaying the cell allocation scheme comprising an adjustment to the battery and number of cells impacted by the adjustment to the battery.

According to one or more embodiments, the above-described system can be implemented as a computer-implemented method or a computer program product.

### DESCRIPTION OF THE DRAWINGS

FIG. 1 illustrates a block diagram of an example, non-limiting system that facilitates adaptive fast charging of vehicular batteries in accordance with one or more embodiments described herein.
FIG. 2 illustrates a block diagram of an example, non-limiting system including a fast charging instruction that facilitates adaptive fast charging of vehicular batteries in accordance with one or more embodiments described herein.
FIG. 3 illustrates a block diagram of an example, non-limiting system including a vehicular context, a machine learning model, and a cell allocation determination that facilitates adaptive fast charging of vehicular batteries in accordance with one or more embodiments described herein.
FIG. 4 illustrates an example, non-limiting block diagram showing how a machine learning model can generate a cell allocation determination in accordance with one or more embodiments described herein.
FIG. 5 illustrates a block diagram of an example, non-limiting system including an allocation alert that facilitates adaptive fast charging of vehicular batteries in accordance with one or more embodiments described herein.
FIG. 6 illustrates a block diagram of an example, non-limiting system including a recommended time or date that facilitates adaptive fast charging of vehicular batteries in accordance with one or more embodiments described herein.
FIG. 7 illustrates an example, non-limiting block diagram showing how a machine learning model can generate a cell allocation determination and a recommended time or date for fast charging in accordance with one or more embodiments described herein.
FIG. 8 illustrates an example, non-limiting block diagram of a training dataset in accordance with one or more embodiments described herein.
FIG. 9 illustrates an example, non-limiting block diagram showing how a machine learning model can be trained in accordance with one or more embodiments described herein.
FIG. 10A illustrates a flow diagram of an example, non-limiting computer-implemented method that facilitates adaptive fast charging of vehicular batteries in accordance with one or more embodiments described herein.
FIG. 10B illustrates a flow diagram of an example, non-limiting computer-implemented method that facilitates adaptive fast charging of vehicular batteries in accordance with one or more embodiments described herein.
FIG. 11 illustrates a block diagram of an example, non-limiting operating environment in which one or more embodiments described herein can be facilitated.
FIG. 12 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Many modern vehicles (e.g., cars, trucks, buses, motorcycles, watercraft, aircraft) implement fully or partially electric propulsion systems. For example, various vehicles are fully electric, such that they are propelled by electric motors rather than internal combustion engines. As another example, various other vehicles are hybrids, such that they are propelled by both electric motors and internal combustion engines working together simultaneously or alternately.

A vehicle having a fully or partially electric propulsion system can have an onboard battery that powers the electric propulsion system. Such onboard battery can be charged via normal charging or fast charging. Normal charging can involve routing electricity to the onboard battery at any suitable baseline transmission rate (e.g., measured in watts or kilowatts). In contrast, fast charging can instead involve routing electricity to the onboard battery at a heightened transmission rate (e.g., heightened by one or more multiples or orders of magnitude as compared to the baseline transmission rate). In practice, recharging the onboard battery from 10% capacity to 80% capacity via normal charging can consume several hours (e.g., 6 to 8 hours), whereas recharging the onboard battery from 10% capacity to 80% capacity via fast charging can instead consume a fraction of an hour (e.g., 15 to 30 minutes). However, when exposed to fast charging, the onboard battery experiences accelerated or expedited wear (e.g., physical, chemical, or electrical decomposition or breakdown of electrolytes or other hardware components of the onboard battery), as compared to when the onboard battery is instead exposed to normal charging.

To save time in the hustle and bustle of modern life, an operator of the vehicle will often make heavy, or even exclusive, use of fast charging. Although this reduces time spent charging the onboard battery (and thus time spent waiting by the operator), such heavy or exclusive use of fast charging can lead to premature failure of the onboard battery.

Accordingly, systems or techniques that can address one or more of these technical problems can be desirable.

Various embodiments described herein can address one or more of these technical problems. One or more embodiments described herein include systems, computer-implemented methods, apparatus, or computer program products that can facilitate adaptive fast charging of vehicular batteries. In other words, various embodiments described herein can leverage artificial intelligence to reduce wear of a vehicular battery caused by fast charging. In particular, when fast charging of the vehicular battery is requested or commanded, such artificial intelligence can determine which portions (e.g., which individual cells) of the vehicular battery to subject to fast charging and which other portions (e.g., which other individual cells) of the vehicular battery to instead subject to normal charging (or to no charging at all), based on the current health of the vehicular battery and based on driving habits or driving plans associated with the vehicular battery. In various cases, such artificial intelligence can be considered as performing wear balancing within the vehicular battery, so as to increase or prolong a useful life of the vehicular battery, where such wear balancing can be informed by or tailored to how the vehicular battery is actually used (e.g., different batteries can be used differently, which means that their useful lives can best be prolonged via different wear balancing). Accordingly, various embodiments described herein can be considered as helping to reduce or ameliorate excessive wear of the vehicular battery caused by heavy or exclusive fast charging.

Various embodiments described herein can be considered as a computerized tool (e.g., any suitable combination of computer-executable hardware or computer-executable software) that can facilitate adaptive fast charging of vehicular batteries. In various aspects, the computerized tool can comprise an access component, an allocation component, or a charging component.

In various embodiments, there can be a vehicle. In various aspects, the vehicle can comprise an onboard battery that can supply electricity to a fully or partially electric propulsion system of the vehicle. In various instances, the onboard battery can comprise a set of normal battery cells and a set of fast battery cells. In various cases, the set of normal battery cells can comprise any suitable number of normal battery cells, and the set of fast battery cells can comprise any suitable number of fast battery cells. In various aspects, a normal battery cell can be any suitable battery cell that is configured or designed for normal charging, whereas a fast battery cell can be any suitable battery cell that is instead configured or designed for fast charging. That is, a normal battery cell can experience a baseline level of wear when subjected to normal charging and a heightened level of wear when subjected to fast charging, whereas a fast battery cell can instead experience a baseline level of wear when subjected to fast charging and even less wear when subjected to normal charging. In other words, if both a normal battery cell and a fast battery cell were subjected to fast charging, the normal battery cell would experience significantly more degradation or wear than the fast battery cell. In various instances, a normal battery cell can exhibit any suitable construction or composition that is designed for normal charging (e.g., can be a chemical battery cell, can be a solid-state battery cell), whereas a fast battery cell can exhibit any suitable construction or composition that is designed for fast charging (e.g., can be an advanced chemical battery cell, can be an advanced solid-state battery cell).

In various embodiments, the charging component of the computerized tool can electronically control, electronically govern, or otherwise electronically access any suitable vehicular charging station at which the vehicle can dock. More specifically, the vehicular charging station can comprise a charging cable that can be plugged or inserted into a charging port of the vehicle, so as to supply electricity to the onboard battery. Accordingly, when the vehicle is docked at the vehicular charging station, the charging component can control, govern, or otherwise influence how the onboard battery of the vehicle is charged (e.g., how much electricity is routed to the onboard battery, how quickly electricity is routed to the onboard battery, which individual battery cells electricity is routed to).

In various embodiments, the access component of the computerized tool can electronically receive or otherwise electronically access a fast charging instruction. In some aspects, the access component can electronically retrieve the fast charging instruction from any suitable centralized or decentralized data structures (e.g., graph data structures, relational data structures, hybrid data structures), whether remote from or local to the access component. In any case, the access component can electronically obtain or access the fast charging instruction, such that other components of the computerized tool can electronically interact with (e.g., read, write, edit, copy, manipulate) the fast charging instruction.

In various aspects, the fast charging instruction can be any suitable electronic message that indicates, specifies, or commands that the onboard battery is to undergo fast charging. In some cases, the vehicle can electronically broadcast the fast charging instruction in response to being docked at (e.g., being plugged into) the vehicular charging station governed by the charging component. In other cases, the fast charging instruction can be manually provided by an operator of the vehicle, via a touchscreen, keyboard, or voice control system of the vehicle, or via a touchscreen, keyboard, or voice control system of the vehicular charging station.

In various embodiments, the allocation component of the computerized tool can electronically record, measure, or otherwise capture a current context of the vehicle.

In various aspects, the current context can include a current time or date. In various cases, the current time or date can be the time or date at which the fast charging instruction is received. In various instances, the current time or date can be provided by any suitable electronic clock or electronic calendar that is accessible by the allocation component.

In various cases, the current context can include a current health report of the battery. In various aspects, the current health report of the battery can indicate or otherwise represent a respective health status (e.g., a total amount of accumulated wear, a total reduction in maximum storage capacity) of each cell of the onboard battery (e.g., of each of the set of normal battery cells and of each of the set of fast battery cells) at, or as of, the current time or date. In various instances, the current battery health report can be provided to the allocation component by, or can otherwise be derived from, any suitable voltage meters or amperage meters that are integrated with the onboard battery.

In various instances, the current context can include a driving history of the vehicle. In various cases, the driving history of the vehicle can be timeseries data indicating how the vehicle was or has been driven at various past times or dates (e.g., how quickly the vehicle was moving, how sharply the vehicle was turning, or how far the vehicle had traveled since a most recent recharge at each of such various past times or date). In various aspects, the driving history of the vehicle can have been previously recorded by any suitable motion sensors integrated with the vehicle.

In various cases, the current context can include a current destination or route of the vehicle. In various aspects, the current destination or route can indicate a geographic destination to which the vehicle is traveling or is planning to travel at the current time or date, or can indicate a geographic roue along which the vehicle is traveling or is planning to travel at the current time or date. In various instances, the current destination or route can be provided to the allocation component by any suitable electronic navigation system of the vehicle.

In various aspects, the current context can include a current weather forecast associated with the current destination or route. In various instances, the current weather forecast can be timeseries data indicating an outside temperature, an outside pressure, an outside precipitation level, or an outside wind speed that is measured at the current time or date and at or along the current destination or route, or that is predicted to occur at future times or dates at or along the current destination or route. In various cases, the current weather forecast can be provided to the allocation component by any suitable computing device associated with a weather forecasting service.

In various aspects, the current context can include one or more upcoming scheduled events associated with the vehicle. In various instances, the one or more upcoming scheduled events can indicate any suitable activities which are automotive-relevant or which otherwise might involve the vehicle, and in which an operator of the vehicle plans, as of the current time or date, to participate (e.g., scheduled dragstrip race, scheduled offroad excursion, scheduled trailer towing, scheduled road trip). In various cases, the one or more upcoming scheduled events can be provided to the allocation component by any suitable electronic calendar associated with the vehicle.

In various aspects, the current context can include one or more current vehicle sensor measurements. In various instances, the one or more current vehicle sensor measurements can indicate, at the current time or date, the values of any suitable potentially transient characteristics or attributes of the vehicle (e.g., current tire pressures, current total weight, current coolant temperatures). In various cases, the one or more vehicle sensor measurements can be provided to the allocation component via any suitable electronic sensors that are integrated with the vehicle.

These are mere non-limiting examples of the current context of the vehicle. In various cases, the current context can include any other suitable information pertaining to the vehicle or to the onboard battery.

In various embodiments, the allocation component can electronically store, maintain, control, or otherwise access a machine learning model. In various aspects, the machine learning model can exhibit any suitable internal architecture, such as a deep learning neural network internal architecture. For example, the machine learning model can include any suitable numbers of any suitable types of layers (e.g., input layer, one or more hidden layers, output layer, any of which can be convolutional layers, dense layers, non-linearity layers, pooling layers, batch normalization layers, or padding layers). As another example, the machine learning model can include any suitable numbers of neurons in various layers (e.g., different layers can have the same or different numbers of neurons as each other). As yet another example, the machine learning model can include any suitable activation functions (e.g., softmax, sigmoid, hyperbolic tangent, rectified linear unit) in various neurons (e.g., different neurons can have the same or different activation functions as each other). As still another example, the machine learning model can include any suitable interneuron connections or interlayer connections (e.g., forward connections, skip connections, recurrent connections). However, these are mere non-limiting examples of the machine learning model. In other cases, the machine learning model can exhibit any other suitable internal architecture (e.g., support vector machine, naive Bayes, linear regression, logistic regression, decision tree, random forest).

In any case, the machine learning model can be configured to receive, as input and in response to the fast charging instruction, the current context and to produce, as output, a cell allocation determination.

In various aspects, the cell allocation determination can comprise a respective classification label for each cell of the onboard battery (e.g., for each of the set of normal battery cells and for each of the set of fast battery cells). In various instances, a classification label of the cell allocation determination can indicate whether or not a respective cell of the onboard battery should (in the opinion of the machine learning model) undergo fast charging. In other words, the fast charging instruction can indicate that the onboard battery is to be fast charged, and the cell allocation determination can be considered as a type of segmentation mask indicating which cells of the onboard battery should undergo such fast charging and which cells should not (e.g., which cells should instead undergo normal charging or no charging at all).

In various cases, the machine learning model can be trained, as described herein, such that the cell allocation determination balances or otherwise distributes wear across or among the individual cells of the onboard battery, so as to prolong or increase a useful life of the onboard battery while also sufficiently preparing the onboard battery for the actual use that the onboard battery has seen or will soon see.

For example, suppose that the current context of the vehicle indicates that a particular fast charging battery cell has a disproportionately high amount of wear and that the vehicle is likely to be subjected to only non-intense driving conditions (e.g., history of gentle accelerations or turns; no currently-flagged faraway destination or long route). In such case, the cell allocation determination can indicate that that particular fast charging battery cell should not be subjected to fast charging at the current time or date. In other words, the machine learning model can have concluded that the onboard battery will be sufficiently prepared for the non-intense driving conditions that are likely to be encountered, notwithstanding that the particular fast charging battery cell is not fast charged at the current time or date.

As another example, suppose that the current context of the vehicle indicates that the particular fast charging battery cell has a disproportionately high amount of wear and that the vehicle is likely to be subjected to moderately-intense driving conditions (e.g., history of moderate accelerations or turns; one or more currently-flagged faraway destinations or long routes; some slightly inclement weather forecasted). In such case, the cell allocation determination can indicate that that particular fast charging battery cell should be subjected to fast charging at the current time or date, notwithstanding its disproportionately high wear. In other words, the machine learning model can have concluded that the onboard battery will not be sufficiently prepared for the moderately-intense driving conditions that are likely to be encountered unless the particular fast charging battery cell is fasted charged at the current time or date.

As yet another example, suppose that the current context of the vehicle indicates that the particular fast charging battery cell has a disproportionately high amount of wear, that a particular normal charging battery cell has a disproportionately low amount of wear, and that the vehicle is likely to be subjected to moderately-intense driving conditions (e.g., history of moderate accelerations or turns; one or more currently-flagged faraway destinations or long routes; some slightly inclement weather forecasted). In such case, the cell allocation determination can indicate that the particular fast charging battery cell should not be subjected to fast charging at the current time or date, and the cell allocation determination can indicate that the particular normal charging battery cell should be subjected to fast charging at the current time or date. In other words, the machine learning model can have concluded that, given the already-severe degradation of the particular fast charging battery cell and given the moderately-intense driving conditions that are likely to be encountered, it is preferable to not fast charge the particular fast charging battery cell and to instead fast charge the particular normal charging battery cell, notwithstanding that the particular normal charging battery cell is not configured or designed for fast charging.

As even another example, suppose that the current context of the vehicle indicates that the vehicle is likely to be subjected to extremely-intense driving conditions (e.g., history of sudden accelerations or turns; upcoming dragstrip race; freezing weather forecasted). In such case, the cell allocation determination can indicate that, in addition to all of the set of fast charging battery cells, multiple normal charging battery cells should be subjected to fast charging at the current time or date. In other words, the machine learning model can have concluded that the onboard battery will not be sufficiently prepared for the extremely-intense driving conditions that are likely to be encountered unless the multiple normal charging battery cells are fast charged in conjunction with the set of fast charging battery cells at the current time or date.

In some cases, if the cell allocation determination indicates that a specific battery cell is not to be fast charged at the current time or date, this can indicate that the specific battery cell is instead supposed to be normal charged at the current time or date (e.g., each classification label of the cell allocation determination can be a binary label that indicates either: a respective cell is to be fast charged; or the respective cell is to be normal charged). In other cases, if the cell allocation determination indicates that the specific battery cell is not to be fast charged at the current time or date, this can indicate that the specific battery cell is instead supposed to be not charged at all at the current time or date (e.g., each classification label of the cell allocation determination can be a binary label that indicates either: a respective cell is to be fast charged; or the respective cell is to be not charged). In even other cases, the cell allocation determination can indicate that some cells are to be fast charged, while other cells are to be normal charged, and while yet other cells are to be not charged (e.g., each classification label of the cell allocation determination can be a tertiary label that indicates either: a respective cell is to be fast charged; the respective cell is to be normal charged; or the respective cell is to be not charged).

In any case, the allocation component can be considered as intelligently and adaptively determining which individual battery cells of the onboard battery are to be fast charged and which are not, based on the current context of the vehicle.

In various embodiments, the charging component can electronically charge, at the current time or date, the onboard battery in accordance with the cell allocation determination. That is, the charging component can perform, or otherwise cause to be performed, at the current time or date: fast charging on whichever battery cells are specified by the cell allocation determination to be fast charged; normal charging on whichever battery cells (if any) are specified by the cell allocation determination to be normal charged; and no charging on whichever battery cells (if any) are specified by the cell allocation determination to be not charged.

In various embodiments, if the cell allocation determination indicates that any of the set of normal charging battery cells should undergo fast charging at the current time or date, then the allocation component can electronically generate any suitable alert or warning indicating such. In various cases, the allocation component can transmit the alert or warning to any suitable computing device. In various other cases, the allocation component can visually render the alert or warning on any suitable electronic display (e.g., on a computer screen of the vehicle or of the vehicular charging station governed by the charging component).

Thus far, the herein disclosure has mainly described various embodiments in which the allocation component determines, in real-time or on-the-fly in response to the fast charging notification, which cells of the onboard battery should be fast charged and which should not. In other embodiments, however, the allocation component can instead preemptively recommend which cells of the onboard battery should be fast charged and which should not, in the absence of the fast charging notification. In such cases, the vehicle can be not docked at or plugged into the vehicular charging station at the current time or date. Furthermore, in such cases, the machine learning model can be configured to receive as input the current context of the vehicle and to produce as output not just the cell allocation determination, but also a future time or date at which implementation of the cell allocation determination is recommended. In other words, the machine learning model can be configured to determine not just which individual cells of the onboard battery should be subjected to fast charging, to normal charging, or to no charging at all given the current context of the vehicle, but the machine learning model can be configured to also predict a future time or date at which performance of such charging would be appropriate or convenient in light of the current context of the vehicle.

To help cause the cell allocation determination to be accurate, the machine learning model can, as described herein, undergo any suitable type or paradigm of training (e.g., supervised training, unsupervised training, reinforcement learning).

Various embodiments described herein can be employed to use hardware or software to solve problems that are highly technical in nature (e.g., to facilitate adaptive fast charging for vehicular batteries), that are not abstract and that cannot be performed as a set of mental acts by a human. Further, some of the processes performed can be performed by a specialized computer (e.g., a deep learning neural network having internal parameters such as convolutional kernels) for carrying out defined tasks related to adaptive fast charging for vehicular batteries.

For example, such defined tasks can include: accessing, by a device operatively coupled to a processor, an instruction to perform fast charging on a battery of a vehicle; determining, by the device, in response to the instruction, and via execution of a machine learning model on a context of the vehicle, a region of the battery to allocate for fast charging; and performing, by the device, fast charging on the determined region of the battery and normal charging or no charging on a remainder of the battery.

Such defined tasks are not performed manually by humans. Indeed, neither the human mind nor a human with pen and paper can electronically allocate, via execution of a machine learning model (e.g., deep learning neural network) on vehicular context data (e.g., battery health report, driving history, driving destination/route, weather forecast), some cells of a vehicular battery to fast charging and other cells of the vehicular battery to normal charging or no charging, and electronically charge the vehicular battery in accordance with that allocation. Indeed, vehicles, machine learning models (e.g., deep learning neural networks), and batteries are inherently-computerized, hardware-based devices that simply cannot be implemented in any way by the human mind without computers. Accordingly, a computerized tool that can determine, via artificial intelligence, how to allocate individual cells of a vehicular battery for fast charging is likewise inherently-computerized and hardware-based and cannot be implemented in any sensible, practical, or reasonable way without computers.

Moreover, various embodiments described herein can integrate into a practical application various teachings relating to adaptive fast charging of vehicular batteries. As explained above, normal charging can cause low battery wear but can consume excessive time, whereas fast charging can consume little time but can expedite battery wear. To save time, vehicle owners often make heavy or exclusive use of fast charging, which can cause premature battery failure.

Various embodiments described herein can address or ameliorate various of these technical problems. Specifically, various embodiments described herein can leverage artificial intelligence so as to allocate individual cells of a vehicular battery to fast charging, normal charging, or no charging, depending upon a real-time context of the vehicular battery. In particular, the real-time context can indicate any suitable information pertaining to the vehicular battery, such as: a present-time health status of each cell of the vehicular battery; a history of driving patterns or driving conditions that the vehicular battery has experienced; a present-time destination or route to which or along which the vehicular battery is supposed to travel; or weather conditions that are presently affecting or about to affect the vehicular battery. In various aspects, a machine learning model can be executed on that real-time context, thereby yielding a cell allocation determination. As described herein, the cell allocation determination can indicate which specific or individual cells of the vehicular battery should be fast charged, and which should not, in light of the real-time vehicular context. In various cases, the machine learning model can be trained or configured such that the cell allocation determination helps to prolong the useful life of the vehicular battery while also helping to ensure that the vehicular battery is prepared to handle likely upcoming use that is indicated by the real-time context. In various instances, the vehicular battery can then be charged in accordance with the cell allocation determination. In this way, various embodiments described herein can be considered as actively adapting or modifying which cells of the vehicular battery are subjected to fast charging, based on the actual use experienced by the vehicular battery. Accordingly, various embodiments described herein can help to ameliorate premature battery failures. That is, various embodiments described herein can address various disadvantages suffered by existing techniques. Thus, various embodiments described herein certainly constitute a concrete and tangible technical improvement in the field of electric charging of vehicles. Therefore, various embodiments described herein clearly qualify as useful and practical applications of computers.

Furthermore, various embodiments described herein can control real-world tangible devices based on the disclosed teachings. For example, various embodiments described herein can electronically control (e.g., charge, discharge) real-world vehicular charging stations and real-world vehicular batteries.

It should be appreciated that the herein figures and description provide non-limiting examples of various embodiments and are not necessarily drawn to scale.

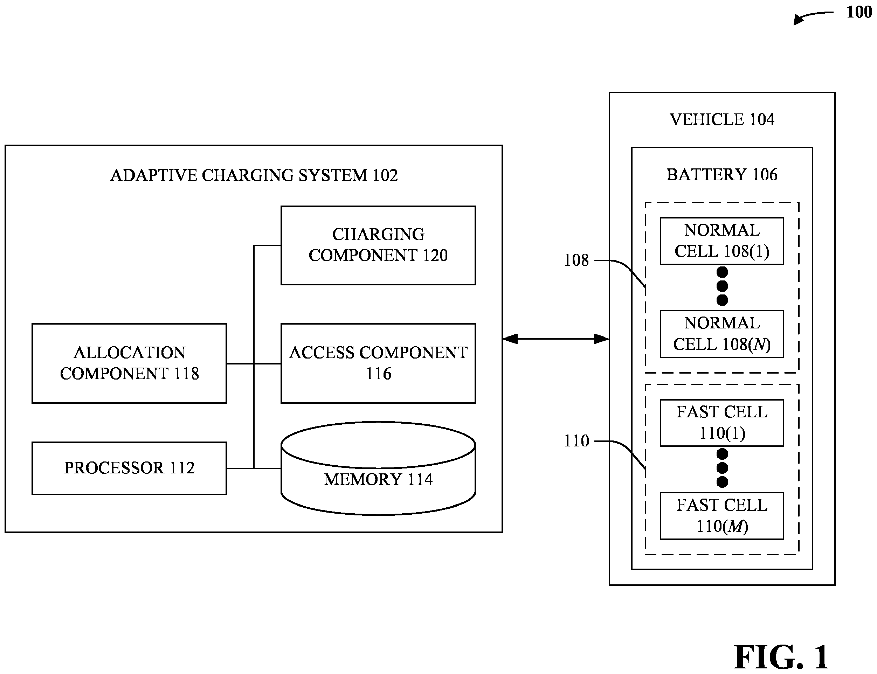

FIG. 1 illustrates a block diagram of an example, non-limiting system 100 that can facilitate adaptive fast charging of vehicular batteries in accordance with one or more embodiments described herein. As shown, an adaptive charging system 102 can be electronically integrated, via any suitable wired or wireless electronic connections, with a vehicle 104.

In various embodiments, the vehicle 104 can be any suitable vehicle that has a fully electric propulsion system or a partially electric propulsion system. In various aspects, that propulsion system can be electrically powered by a battery 106 that is onboard (e.g., that is physically located on or within) the vehicle 104.

In various instances, the battery 106 can comprise a set of normal cells 108. In various cases, the set of normal cells 108 can comprise *n* cells, for any suitable positive integer *n:* a normal cell 108(1) to a normal cell 108(n). In various aspects, any of the set of normal cells 108 can be any suitable battery cell exhibiting any suitable composition, make up, or physical construction that is configured, designed, or otherwise suited to undergo habitual or frequent normal charging. As a non-limiting example, any of the set of normal cells 108 can be any suitable chemical battery cell that is rechargeable, such as: a lithium-ion battery cell; an aluminum-ion battery cell; a calcium battery cell; a flow battery cell; or a lead-acid battery cell. As another non-limiting example, any of the set of normal cells 108 can be any suitable sold-state battery cell, such as: an inorganic solid electrolyte battery cell; a solid polymer electrolyte battery cell; or a quasi-solid-state electrolyte battery cell. In various cases, when exposed to normal charging, any of the set of normal cells 108 can accrue any suitable baseline, threshold, or otherwise non-expedited amount of additional wear or degradation (e.g., of wear or degradation to an anode, a cathode, or an electrolyte of the normal cell). In contrast, when exposed to fast charging, any of the set of normal cells 108 can accrue more (e.g., in some cases, significantly more) than that baseline, threshold, or otherwise non-expedited amount of additional wear or degradation.

In various aspects, the battery 106 can comprise a set of fast cells 110. In various cases, the set of fast cells 110 can comprise *m* cells, for any suitable positive integer *m:* a fast cell 110(1) to a fast cell 110(m). In various instances, any of the set of fast cells 110 can be any suitable battery cell exhibiting any suitable composition, make up, or physical construction that is configured, designed, or otherwise suited to undergo habitual or frequent fast charging. As a non-limiting example, any of the set of fast cells 110 can be any suitable advanced chemistry cell (ACC). As another non-limiting example, any of the set of fast cells 110 can be any suitable advanced sold-state battery cell. In various cases, when exposed to fast charging, any of the set of fast cells 110 can accrue any suitable baseline, threshold, or otherwise non-expedited amount of additional wear or degradation (e.g., of wear or degradation to an anode, a cathode, or an electrolyte of the fast cell). In contrast, when exposed to normal charging, any of the set of fast cells 110 can accrue less than that baseline, threshold, or otherwise non-expedited amount of additional wear or degradation. In other words, suppose that a fast cell and a normal cell were both exposed to an instance of fast charging. In such case, the fast cell would experience some defined amount of additional wear or degradation due to that instance of fast charging, and the normal cell would experience significantly more (e.g., one or more multiples more) additional wear or degradation than that defined amount due to that instance of fast charging.

In various aspects, the set of normal cells 108 and the set of fast cells 110 can exhibit any suitable coupling layout or coupling topology. As a non-limiting example, various of the set of normal cells 108 and of the set of fast cells 110 can be coupled in series with other. As another non-limiting example, various of the set of normal cells 108 and of the set of fast cells 110 can be coupled in parallel with other. As yet another non-limiting example, any suitable combination of parallel or serial coupling can be implemented in the battery 106.

In various aspects, it can be desired to perform adaptive fast charging on the battery 106. As described herein, the adaptive charging system 102 can facilitate such adaptive fast charging.

In various embodiments, the adaptive charging system 102 can comprise a processor 112 (e.g., computer processing unit, microprocessor) and a non-transitory computer-readable memory 114 that is operably or operatively or communicatively connected or coupled to the processor 112. The non-transitory computer-readable memory 114 can store computer-executable instructions which, upon execution by the processor 112, can cause the processor 112 or other components of the adaptive charging system 102 (e.g., access component 116, allocation component 118, charging component 120) to perform one or more acts. In various embodiments, the non-transitory computer-readable memory 114 can store computer-executable components (e.g., access component 116, allocation component 118, charging component 120), and the processor 112 can execute the computer-executable components.

In various embodiments, the adaptive charging system 102 can comprise a charging component 120. In various aspects, the charging component 120 can electronically control, electronically manage, electronically direct, or otherwise electronically govern any suitable vehicular charging station. In various instances, the vehicular charging station can be any suitable station, stall, kiosk, booth, or outlet at which the vehicle 104 can charge the battery 106. In other words, the vehicular charging station can be considered as a distribution access point of any suitable electric grid. In various cases, the vehicle 104 can dock at the vehicular charging station. That is, the vehicle 104 can physically drive to and park beside or at the vehicular charging station, a charging cable of the vehicular charging station can be inserted into a charging port of the vehicle 104 (e.g., or equivalently, a charging cable of the vehicle 104 can be inserted into a discharging port of the vehicular charging station), and the vehicular charging station can accordingly route electricity to the battery 106 so as to charge the battery 106. In various cases, the charging component 120 can electronically control how much or how quickly electricity is routed from the vehicular charging station to the battery 106. Moreover, in various aspects, the charging component 120 can electronically control where such electricity is routed within the battery 106. As a non-limiting example, the charging component 120 can electronically cause the vehicular charging station to route electricity to certain ones of the set of normal cells 108 or of the set of fast cells 110, and to not route electricity to other ones of the set of normal cells 108 or of the set of fast cells 110. As another non-limiting example, the charging component 120 can electronically cause the vehicular charging station to route electricity at a given transmission rate to certain ones of the set of normal cells 108 or of the set of fast cells 110, and to route electricity at a different transmission rate to other ones of the set of normal cells 108 or of the set of fast cells 110.

In various embodiments, the adaptive charging system 102 can comprise an access component 116. In various instances, as described herein, the access component 116 can electronically access a fast charging notification which can request or command that the battery 106 undergo fast charging.

In various embodiments, the adaptive charging system 102 can comprise an allocation component 118. In various cases, as described herein, the allocation component 118 can electronically determine, via machine learning and in response to the fast charging notification, which of the set of normal cells 108 and of the set of fast cells 110 should undergo fast charging.

In various embodiments, the charging component 120 can cause the vehicular charging station to electrically charge the battery 106, in accordance with the determination of the allocation component 118.

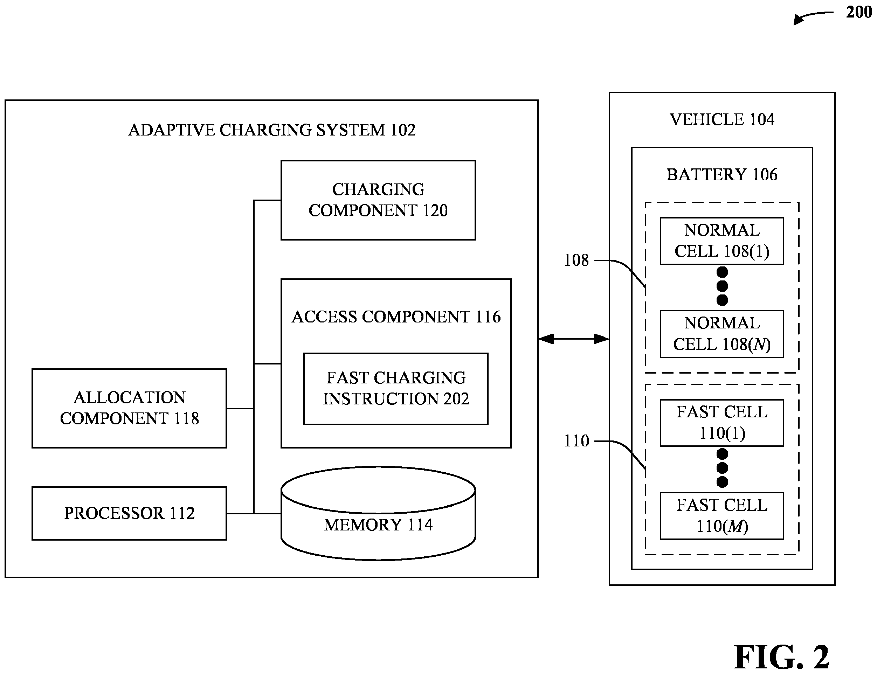

FIG. 2 illustrates a block diagram of an example, non-limiting system 200 including a fast charging instruction that can facilitate adaptive fast charging of vehicular batteries in accordance with one or more embodiments described herein. As shown, the system 200 can, in some cases, comprise the same components as the system 100, and can further comprise a fast charging instruction 202.

In various embodiments, the access component 116 can electronically receive or otherwise electronically access the fast charging instruction 202. In various aspects, the fast charging instruction 202 can be any suitable electronic data (e.g., can be one or more scalars, one or more vectors, one or more matrices, one or more tensors, one or more character strings, or any suitable combination thereof) that indicates, represents, or otherwise conveys a request or a command to perform fast charging on the battery 106. In various instances, the access component 116 can electronically retrieve the fast charging instruction 202 from any suitable centralized or decentralized data structures (not shown) or from any suitable centralized or decentralized computing devices (not shown). As a non-limiting example, the vehicle 104 can automatically generate the fast charging instruction 202 in response to docking at or being plugged into the vehicular charging station. In such case, the vehicle 104 can electronically broadcast the fast charging instruction 202 to the access component 116. As another non-limiting example, an operator of the vehicle 104 can manually cause the fast charging instruction 202 to be generated, by interacting with any suitable human-computer interface device of the vehicle 104 (e.g., a touchscreen, a keypad, or a voice command system of the vehicle 104) or by interacting with any suitable human-computer interface device of the vehicular charging station (e.g., a touchscreen, a keypad, or a voice command system of the vehicular charging station). In any case, the access component 116 can electronically obtain or access the fast charging instruction 202, such that other components of the adaptive charging system 102 can electronically interact with the fast charging instruction 202.

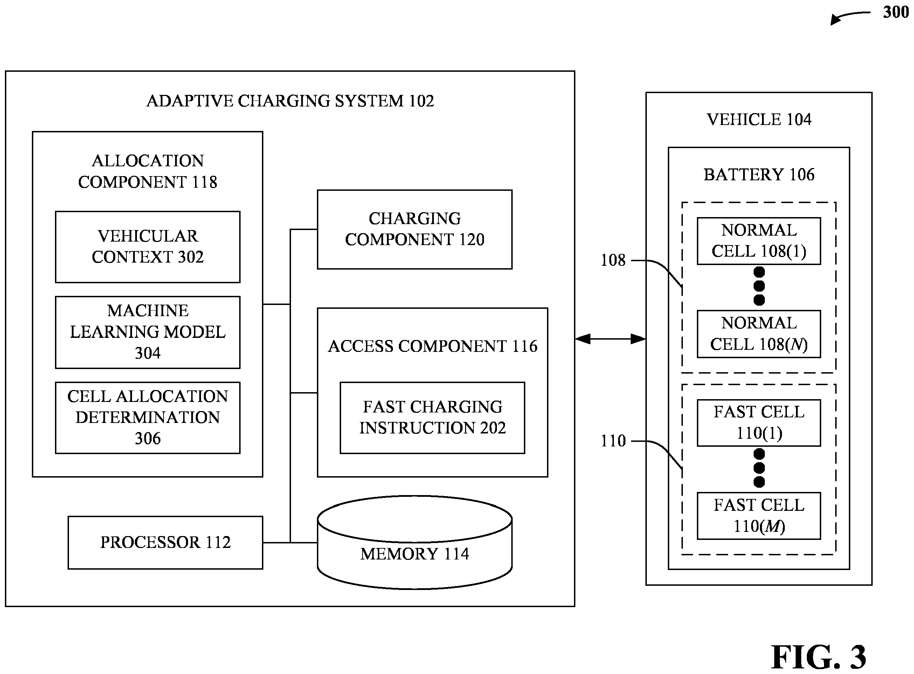

FIG. 3 illustrates a block diagram of an example, non-limiting system 300 including a vehicular context, a machine learning model, and a cell allocation determination that can facilitate adaptive fast charging of vehicular batteries in accordance with one or more embodiments described herein. As shown, the system 300 can, in some cases, comprise the same components as the system 200, and can further comprise a vehicular context 302, a machine learning model 304, and a cell allocation determination 306.

In various embodiments, the allocation component 118 can electronically access (e.g., via communication with the vehicle 104) the vehicular context 302, in response to receipt of the fast charging instruction 202. In various aspects, the vehicular context 302 can be any suitable electronic data that indicates a present-time status or operation of, or that otherwise pertains to, the vehicle 104 or the battery 106.

In various embodiments, the allocation component 118 can electronically store, electronically maintain, electronically control, or otherwise electronically access a machine learning model 304. In various aspects, the machine learning model 304 can have or otherwise exhibit any suitable internal architecture. As a non-limiting example, the machine learning model 304 can have or otherwise exhibit a deep learning internal architecture. For instance, the machine learning model 304 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers. However, these are mere non-limiting examples. In other aspects, the machine learning model 304 can instead have any other suitable internal architecture, such as a support vector machine architecture, a naive Bayes architecture, or a random forest architecture.

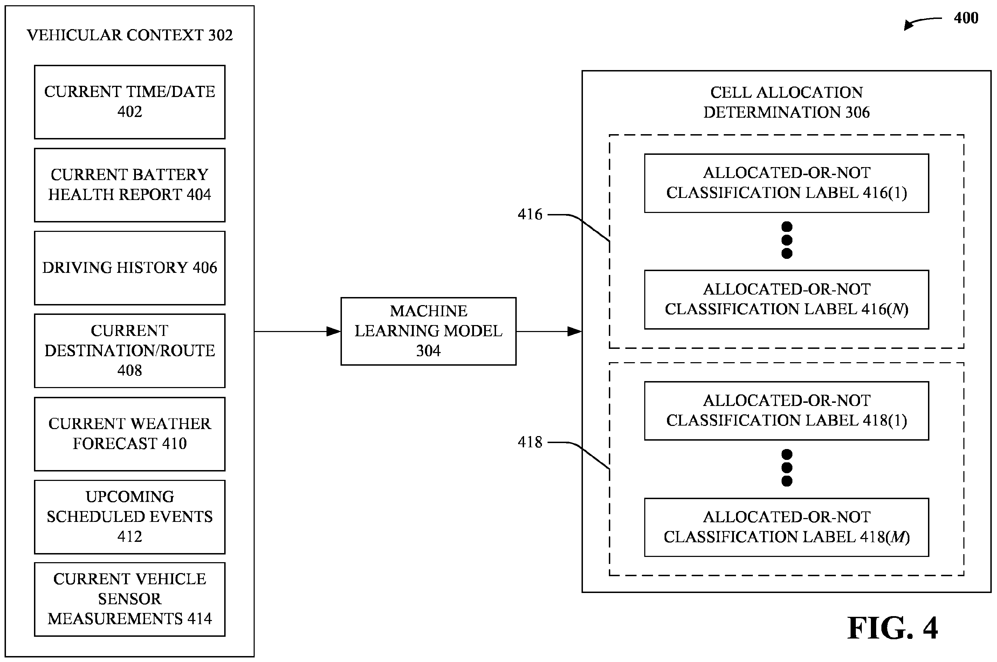

In various aspects, the allocation component 118 can electronically execute the machine learning model 304 on the vehicular context 302. In various instances, such execution can cause the machine learning model 304 to produce the cell allocation determination 306. In various cases, the cell allocation determination 306 can be any suitable electronic data that indicates which of the set of normal cells 108 or of the set of fast cells 110 should be subjected to fast charging in response to the fast charging instruction 202, given or in light of the vehicular context 302. Non-limiting aspects are described with respect to FIG. 4.

In various aspects, the adaptive charging system 102 can make recommendations to the operator to physically swap out portion of the battery 106. For example, a user provides at the vehicle one or more factors (e.g., weather impact on the battery, driving distance value, routing information for a desired route, charging stations configuration for one or more charging station associated with the desired route, tire pressure, total weight of the car including additional items and passengers, desired driving mode (standard, sport, off-road, etc.)) that could impact the usage of the battery 106. In an aspect, the adaptive charging system 102 receives these factors via combination of the vehicular context 302, infotainment system (not shown), machine learning model 304 or a communication component (not shown) electronically or wirelessly connected to the processor 112.

In an aspect, the cell allocation determination 306 (e.g., module or component) of the allocation component 118, based on the one or more factors received from the operator determines a cell allocation scheme for the battery 106. The cell allocation scheme comprises an adjustment to the battery and number of cells impacted by the adjustment ( a recommendation for number of fast cells and number of normal cells of the battery 106. The cell allocation scheme comprises cell allocation data and a digital representation of the battery 106 showing number of fast cells to use and number of normal cells to use, identification cells that should be swapped out (e.g., swapping 15 normal cells with 15 fast cells, swapping 15 fast cells with 15 normal cells, swapping fast cells 1-4 with normal cells or swapping normal cells 1-4 with fast cells). It should be noted that chemistry for fast cell would allow for fast charging rate and normal cell would only allow for standard to trickle charging rate. In an aspect, the user/operator of the vehicle is alerted of any recommended modification to the battery 106 cell allocation scheme.

Upon determining the cell allocation scheme, a display component (not shown) of the adaptive charging system 102, connected electronically or wirelessly, provides/displays data associated with cell allocation scheme such as the digital representation of the battery cell layout is displayed on the infotainment system of the vehicle 104 or on a mobile device. The digital representation may show the exact cells that need to be swapped out to satisfy the cell allocation scheme.

In an aspect, if the user accepts the recommendation, the machine learning model 304 can determine the best facility to have the cells swapped out and can schedule an appointment and transmit the cell allocation scheme to the facility for faster service. In another aspect, the battery 106 is implemented to allow simple swapping of the cells which can be performed without having to go to experts or mechanics. If the user does not accept the recommended cell allocation scheme, then the machine learning model 304 can determine adjustments to drive mode, routing information and/or tire pressure and alert the user of the adjustments.

In an aspect, the cell allocation scheme is adaptive based on driving habit or modification to values of the one or more factors that can impact the usage of the battery 106. For example, if the driver does not drive as fast as initially indicated, the system can adaptively determine a new cell allocation scheme and alert the user. This will allow the user to make adjustment to achieve the highest performance throughout the trip.

FIG. 4 illustrates an example, non-limiting block diagram 400 showing how the machine learning model 304 can generate the cell allocation determination 306 in accordance with one or more embodiments described herein.

In various embodiments, as shown, the vehicular context 302 can comprise a current time/date 402. In various aspects, the current time/date 402 can be specified at any suitable level of granularity. As a non-limiting example, the current time/date 402 can be specified in terms of current or present year, current or present month, current or present week, current or present day, current or present hour, current or present minute, current or present second, current or present fraction of a second, or any suitable combination thereof. In various instances, the current time/date 402 can be read or otherwise measured by any suitable electronic clock, electronic calendar, or electronic timer of the adaptive charging system 102. In various cases, the current time/date 402 can be the time or date at which the fast charging instruction 202 is received (e.g., can be the time or date at or around which the vehicle 104 docks at the vehicular charging station controlled by the charging component 120).

In various aspects, as shown, the vehicular context 302 can comprise a current battery health report 404. In various instances, the current battery health report 404 can be one or more scalars, one or more vectors, one or more matrices, one or more tensors, one or more character strings, or any suitable combination thereof that can indicate or otherwise represent a respective health status of each cell of the battery 106 at, or otherwise as of, the current time/date 402. As a non-limiting example, the current battery health report 404 can indicate or specify how much total wear or degradation, how much total reduction in maximum electricity storage capacity, or how much total performance corrosion the normal cell 108(1) has accumulated or accrued as of the current time/date 402. As another non-limiting example, the current battery health report 404 can indicate or specify how much total wear or degradation, how much total reduction in maximum electricity storage capacity, or how much total performance corrosion the normal cell 108(n) has accumulated or accrued as of the current time/date 402. As yet another non-limiting example, the current battery health report 404 can indicate or specify how much total wear or degradation, how much total reduction in maximum electricity storage capacity, or how much total performance corrosion the fast cell 110(1) has accumulated or accrued as of the current time/date 402. As still another non-limiting example, the current battery health report 404 can indicate or specify how much total wear or degradation, how much total reduction in maximum electricity storage capacity, or how much total performance corrosion the fast cell 110(*m*) has accumulated or accrued as of the current time/date 402. In some aspects, the current battery health report 404 can indicate or otherwise represent how much electricity is respectively stored within each cell of the battery 106 at the current time/date 402. In various cases, the current battery health report 404 can be read, measured, captured, or otherwise electronically quantified by any suitable voltage meters, amperage meters, or other electronic sensors that are integrated with the battery 106.

In various aspects, as shown, the vehicular context 302 can comprise a driving history 406. In various instances, the driving history 406 can be one or more scalars, one or more vectors, one or more matrices, one or more tensors, one or more character strings, or any suitable combination thereof that can indicate or otherwise represent how gently or how harshly the vehicle 104 was driven at, or otherwise as of, each of various past or previous times/dates. As a non-limiting example, the driving history 406 can be or comprise a timeseries showing how quickly the vehicle 104 was traveling at each of any suitable number of prior times/dates. As another non-limiting example, the driving history 406 can be or comprise a timeseries showing how quickly the vehicle 104 was accelerated or decelerated at each of any suitable number of prior times/dates. As yet another non-limiting example, the driving history 406 can be or comprise a timeseries showing how sharply or how gradually the vehicle 104 was executing a turn at each of any suitable number of prior times/dates. As even another non-limiting example, the driving history 406 can be or comprise a timeseries showing how much distance was covered by the vehicle 104 or how much time had elapsed, since a most recent recharge of the battery 106 at each of any suitable number of prior times/dates. As still another non-limiting example, the driving history 406 can be or comprise a timeseries showing which operational mode (e.g., economy mode, sport mode, offroad mode) the vehicle 104 was in at each of any suitable number of prior times/dates. In various cases, the driving history 406 can be recorded or otherwise electronically generated by any suitable motion sensors of the vehicle 104 (e.g., via a speedometer of the vehicle 104, via an odometer of the vehicle 104, via an accelerometer of the vehicle 104, via a steering-degree sensor of the vehicle 104, via a gyro sensor of the vehicle 104, via a global positioning sensor of the vehicle 104).

In various aspects, as shown, the vehicular context 302 can comprise a current destination/route 408. In various instances, the current destination/route 408 can be one or more scalars, one or more vectors, one or more matrices, one or more tensors, one or more character strings, or any suitable combination thereof that can indicate or otherwise represent either: a geographic location or address to which it is desired or planned for the vehicle 104 to travel; or a geographic path made up of piece-wise stretches of roads or streets along which it is desired or planned for the vehicle 104 to travel. In various cases, the current destination/route 408 can be indicative of a total driving distance that the vehicle 104 has not yet traveled as of the current time/date 402, but which the vehicle 104 is soon about to travel. In various aspects, the current destination/route 408 can be electronically identified by or electronically recommended by any suitable navigation system of the vehicle 104. In other aspects, the current destination/route 408 can be electronically inputted into the navigation system of the vehicle 104 by the operator of the vehicle 104 (e.g., via any suitable touchscreen, keyboard, or voice command system of the vehicle 104 or of the navigation system).

In various aspects, as shown, the vehicular context 302 can comprise a current weather forecast 410. In various instances, the current weather forecast 410 can be one or more scalars, one or more vectors, one or more matrices, one or more tensors, one or more character strings, or any suitable combination thereof that can indicate or otherwise represent weather that is occurring at or along the current destination/route 408 at the current time/date 402, or that is forecasted at the current time/date 402 to occur at or along the current destination/route 408 in the near future (e.g., in the next few hours). As a non-limiting example, the current weather forecast 410 can be or comprise an atmospheric temperature that is occurring at or along the current destination/route 408 at the current time/date 402, or that is forecasted at the current time/date 402 to occur at or along the current destination/route 408 in the near future. As another non-limiting example, the current weather forecast 410 can be or comprise an atmospheric pressure that is occurring at or along the current destination/route 408 at the current time/date 402, or that is forecasted at the current time/date 402 to occur at or along the current destination/route 408 in the near future. As yet another non-limiting example, the current weather forecast 410 can be or comprise an atmospheric precipitation level that is occurring at or along the current destination/route 408 at the current time/date 402, or that is forecasted at the current time/date 402 to occur at or along the current destination/route 408 in the near future. As still another non-limiting example, the current weather forecast 410 can be or comprise an atmospheric wind speed that is occurring at or along the current destination/route 408 at the current time/date 402, or that is forecasted at the current time/date 402 to occur at or along the current destination/route 408 in the near future. In various cases, the current weather forecast 410 can be supplied or provided by any suitable meteorological sensors or by any suitable computing device of a meteorological service.

In various aspects, as shown, the vehicular context 302 can comprise one or more upcoming scheduled events 412. In various instances, the one or more upcoming scheduled events 412 can be one or more scalars, one or more vectors, one or more matrices, one or more tensors, one or more character strings, or any suitable combination thereof that can indicate or otherwise represent one or more activities that are, as of the current time/date 402, planned by an operator of the vehicle 104, where such activities are inherently automotive or otherwise might involve driving or using the vehicle 104. As a non-limiting example, the one or more upcoming scheduled events 412 can indicate that the operator of the vehicle 104 is scheduled, as of the current time/date 402, to take the vehicle 104 on a road trip in the near future. As another non-limiting example, the one or more upcoming scheduled events 412 can indicate that the operator of the vehicle 104 is scheduled, as of the current time/date 402, to take the vehicle 104 to a dragstrip race in the near future. As yet another non-limiting example, the one or more upcoming scheduled events 412 can indicate that the operator of the vehicle 104 is scheduled, as of the current time/date 402, to take the vehicle 104 on an offroad excursion (e.g., to an offroad park or obstacle course) in the near future. As even another non-limiting example, the one or more upcoming scheduled events 412 can indicate that the operator of the vehicle 104 is scheduled, as of the current time/date 402, to utilize the vehicle 104 to perform trailer towing in the near future. In various cases, the one or more upcoming scheduled events 412 can be supplied or provided by any suitable electronic calendar associated with or otherwise accessible by the vehicle 104. For instance, the operator of the vehicle 104 can have marked the one or more upcoming scheduled events 412 in the electronic calendar, via any suitable touchscreen, keyboard, or voice command system of the vehicle 104. Alternatively, the operator of the vehicle 104 can have marked the one or more upcoming scheduled events 412 in the electronic calendar, via any suitable touchscreen, keyboard, or voice command system of any other suitable computing device (e.g., mobile phone) of the operator, and the vehicle 104 can electronically access the electronic calendar.

In various aspects, as shown, the vehicular context 302 can comprise one or more current vehicle sensor measurements 414. In various instances, the one or more current vehicle sensor measurements 414 can be one or more scalars, one or more vectors, one or more matrices, one or more tensors, one or more character strings, or any suitable combination thereof that can indicate or otherwise represent the values of any suitable measurable properties, characteristics, or attributes of the vehicle 104 at, or otherwise as of, the current time/date 402. As a non-limiting example, the one or more current vehicle sensor measurements 414 can indicate one or more tire pressures of the vehicle 104 at the current time/date 402. As another non-limiting example, the one or more current vehicle sensor measurements 414 can indicate a total weight of (or a weight distribution of) the vehicle 104 at the current time/date 402. As yet another non-limiting example, the one or more current vehicle sensor measurements 414 can indicate one or more thermal fluid temperatures (e.g., coolant temperatures, oil temperatures) of the vehicle 104 at the current time/date 402. In various cases, the one or more current vehicle sensor measurements 414 can be read, measured, captured, or otherwise electronically quantified by any suitable pressure gauges, weight gauges, temperature gauges, or other electronic sensors that are integrated with the vehicle 104.

In various aspects, the vehicular context 302 can comprise any other suitable information that can pertain to the status of, the operation of, or the conditions experienced by the vehicle 104 or the battery 106.

In various instances, the allocation component 118 can execute the machine learning model 304 on the vehicular context 302, and such execution can cause the machine learning model 304 to produce the cell allocation determination 306. As a non-limiting example, the allocation component 118 can feed the vehicular context 302 (e.g., the current time/date 402, the current battery health report 404, the driving history 406, the current destination/route 408, the current weather forecast 410, the one or more upcoming scheduled events 412, the one or more current vehicle sensor measurements 414) to an input layer of the machine learning model 304. In various instances, the vehicular context 302 can complete a forward pass through one or more hidden layers of the machine learning model 304. In various cases, an output layer of the machine learning model 304 can compute the cell allocation determination 306, based on activation maps or intermediate features produced by the one or more hidden layers of the machine learning model 304. In any case, the cell allocation determination 306 can be any suitable electronic data that can be considered as specifying or dictating which cells of the battery 106 will undergo fast charging in response to the fast charging instruction 202.

More specifically, as shown, the cell allocation determination 306 can comprise a set of allocated-or-not classification labels 416. In various aspects, the set of allocated-or-not classification labels 416 can respectively correspond (e.g., in one-to-one fashion) to the set of normal cells 108. Accordingly, since the set of normal cells 108 can comprise n cells, the set of allocated-or-not classification labels 416 can likewise comprise n labels: an allocated-or-not classification label 416(1) to an allocated-or-not classification label 416(n). In various instances, each of the allocated-or-not classification labels 416 can be any suitable electronic data indicating or specifying whether a respective one of the set of normal cells 108 should undergo fast charging at the current time/date 402.

As a non-limiting example, the allocated-or-not classification label 416(1) can correspond to the normal cell 108(1). Thus, the allocated-or-not classification label 416(1) can indicate whether the normal cell 108(1) should (in the opinion of the machine learning model 304) undergo fast charging at the current time/date 402, in light of the vehicular context 302. In some cases, the allocated-or-not classification label 416(1) can be a binary or dichotomous label that indicates one of two possibilities: that the normal cell 108(1) should undergo fast charging at the current time/date 402; or that the normal cell 108(1) should instead undergo normal charging at the current time/date 402. In other cases, the allocated-or-not classification label 416(1) can be a tertiary or trichotomous label that indicates one of three possibilities: that the normal cell 108(1) should undergo fast charging at the current time/date 402; that the normal cell 108(1) should undergo normal charging at the current time/date 402; or that the normal cell 108(1) should not undergo any charging at the current time/date 402.

As another non-limiting example, the allocated-or-not classification label 416(n) can correspond to the normal cell 108(n). So, the allocated-or-not classification label 416(n) can indicate whether the normal cell 108(n) should (in the opinion of the machine learning model 304) undergo fast charging at the current time/date 402, in light of the vehicular context 302. Just as above, the allocated-or-not classification label 416(n) can, in some cases, be a binary or dichotomous label that indicates one of two possibilities (e.g., fast charging versus normal charging) for the normal cell 108(n) at the current time/date 402. But, in other cases, the allocated-or-not classification label 416(n) can be a tertiary or trichotomous label that indicates one of three possibilities (e.g., fast charging versus normal charging versus no charging) for the normal cell 108(n) at the current time/date 402.

In various aspects, the cell allocation determination 306 can comprise a set of allocated-or-not classification labels 418. In various aspects, the set of allocated-or-not classification labels 418 can respectively correspond (e.g., in one-to-one fashion) to the set of fast cells 110. Accordingly, since the set of fast cells 110 can comprise m cells, the set of allocated-or-not classification labels 418 can likewise comprise m labels: an allocated-or-not classification label 418(1) to an allocated-or-not classification label 418(m). In various instances, each of the allocated-or-not classification labels 418 can be any suitable electronic data indicating or specifying whether a respective one of the set of fast cells 110 should undergo fast charging at the current time/date 402.

As a non-limiting example, the allocated-or-not classification label 418(1) can correspond to the fast cell 1 10(1). Thus, the allocated-or-not classification label 418(1) can indicate whether the fast cell 110(1) should (in the opinion of the machine learning model 304) undergo fast charging at the current time/date 402, in light of the vehicular context 302. In some cases, the allocated-or-not classification label 418(1) can be a binary or dichotomous label that indicates one of two possibilities: that the fast cell 110(1) should undergo fast charging at the current time/date 402; or that the fast cell 110(1) should instead undergo normal charging at the current time/date 402. In other cases, the allocated-or-not classification label 418(1) can be a tertiary or trichotomous label that indicates one of three possibilities: that the fast cell 110(1) should undergo fast charging at the current time/date 402; that the fast cell 110(1) should undergo normal charging at the current time/date 402; or that the fast cell 110(1) should not undergo any charging at the current time/date 402.

As another non-limiting example, the allocated-or-not classification label 418(m) can correspond to the fast cell 1 10(m). So, the allocated-or-not classification label 418(m) can indicate whether the fast cell 110(m) should (in the opinion of the machine learning model 304) undergo fast charging at the current time/date 402, in light of the vehicular context 302. Just as above, the allocated-or-not classification label 418(*m*) can, in some cases, be a binary or dichotomous label that indicates one of two possibilities (e.g., fast charging versus normal charging) for the fast cell 110(*m*) at the current time/date 402. But, in other cases, the allocated-or-not classification label 418(*m*) can be a tertiary or trichotomous label that indicates one of three possibilities (e.g., fast charging versus normal charging versus no charging) for the fast cell 110(*m*) at the current time/date 402.

Accordingly, the cell allocation determination 306 can, in some cases, be considered as a cell-wise segmentation mask that indicates which specific cells of the battery 106 should undergo fast charging at the current time/date 402 and which specific cells of the battery 106 should not. In various aspects, the machine learning model 304 can be trained, such that the cell allocation determination 306 accomplishes (or attempts to accomplish) two competing objectives: prolonging the useful life of the battery 106 by preventing any one cell from experiencing disproportionately high wear; and readying or preparing the battery 106 for whatever use that the vehicular context 302 suggests that the vehicle 104 is likely to shortly or soon encounter. In other words, the cell allocation determination 306 can be considered as indicating how the individual cells of the battery 106 should be charged (e.g., fast, normal, or not at all) at the current time/date 402, so that the battery 106 is able to properly handle whatever use it is likely to see, but also so that a total amount of accumulated wear or degradation of the battery 106 is minimized or balanced across the cells of the battery 106.

As a non-limiting example, suppose that the vehicular context 302 indicates that a specific one of the set of fast cells 110 has, at the current time/date 402, a disproportionately large amount of accumulated wear compared to others of the set of fast cells 110. Furthermore, suppose that the vehicular context 302 indicates that the vehicle 104 is, in the near future (e.g., in the next few hours or days following the current time/date 402), likely to encounter easy, non-intense driving conditions (e.g., the driving history 406 can indicate that the vehicle 104 is usually driven very gently, with slow accelerations or decelerations; the current destination/route 408 can indicate that the vehicle 104 is not about to drive a very long distance or in an area where few or no vehicular charging stations are available). In such case, the cell allocation determination 306 can indicate that the specific fast cell should not undergo fast charging at the current time/date 402. That is, the machine learning model 304 can infer that the already-high wear of the specific fast cell should not be exacerbated and that, even if the specific fast cell is not fast charged at the current time/date 402, the battery 106 will nevertheless be able to properly handle whatever upcoming usage that the battery 106 is likely to experience.

As another non-limiting example, suppose again that the vehicular context 302 indicates that a specific one of the set of fast cells 110 has, at the current time/date 402, a disproportionately large amount of accumulated wear compared to others of the set of fast cells 110. Furthermore, suppose that the vehicular context 302 indicates that a specific one of the set of normal cells 108 has, at the current time/date 402, a disproportionately low amount of accumulated wear compared to others of the set of normal cells 108. Further still, suppose that the vehicular context 302 indicates that the vehicle 104 is, in the near future (e.g., in the next few hours or days following the current time/date 402), likely to encounter moderate, somewhat-intense driving conditions (e.g., the driving history 406 can indicate that the vehicle 104 is usually driven moderately, with intermediate accelerations or decelerations; the current destination/route 408 can indicate that the vehicle 104 is about to drive a long distance or in an area where few or no vehicular charging stations are available). In such case, the cell allocation determination 306 can indicate that the specific fast cell should not undergo fast charging at the current time/date 402 but that the specific normal cell should undergo fast charging at the current time/date 402. That is, the machine learning model 304 can infer that the already-high wear of the specific fast cell should not be exacerbated but that, if the specific fast cell is not fast charged at the current time/date 402 and no other cell picks up its slack, the battery 106 will not be able to properly handle whatever upcoming usage that the battery 106 is likely to experience. Accordingly, the machine learning model 304 can be considered as compensating for the presently disproportionately high wear of the specific fast cell with the presently disproportionately low wear of the specific normal cell. In other words, the machine learning model 304 can determine that, given the vehicular context 302, it is more beneficial to fast charge the specific normal cell than to fast charge the specific fast cell, notwithstanding that the specific normal cell is not configured or designed for fast charging.

As yet another non-limiting example, suppose again that the vehicular context 302 indicates that a specific one of the set of fast cells 110 has, at the current time/date 402, a disproportionately large amount of accumulated wear compared to others of the set of fast cells 110. Furthermore, suppose that the vehicular context 302 indicates that a specific one of the set of normal cells 108 has, at the current time/date 402, a disproportionately high amount of accumulated wear compared to others of the set of normal cells 108. Further still, suppose that the vehicular context 302 indicates that the vehicle 104 is, in the near future (e.g., in the next few hours or days following the current time/date 402), likely to encounter demanding, severely-intense driving conditions (e.g., the driving history 406 can indicate that the vehicle 104 is usually driven harshly, with sudden accelerations or decelerations; the one or more upcoming scheduled events 412 can indicate that the vehicle 104 is about to participate in dragstrip racing; the current weather forecast 410 can indicate that the vehicle 104 is about to experience severe weather). In such case, the cell allocation determination 306 can indicate that the specific fast cell and the specific normal cell should both undergo fast charging at the current time/date 402. That is, the machine learning model 304 can infer that, although it is not preferable to exacerbate the already-high wear of the specific fast cell and of the specific normal cell, the battery 106 will not be able to properly handle whatever upcoming usage that the battery 106 is likely to experience without fast charging both the specific fast cell and the specific normal cell.

In this way, the allocation component 118 can be considered as intelligently or cleverly determining which individual cells of the battery 106 should undergo fast charging at the current time/date 402, based on the vehicular context 302.

In various embodiments, the charging component 120 can electronically implement or otherwise abide by the cell allocation determination 306. That is, the charging component 120 can electrically charge the battery 106 (e.g., via the vehicular charging station at which the vehicle 104 can be docked) in accordance with the cell allocation determination 306. In other words, whichever cells should undergo fast charging (as indicated by the cell allocation determination 306) can be fast charged at the current time/date 402 by the charging component 120, whichever cells should undergo normal charging (as indicated by the cell allocation determination 306) can be normal charged at the current time/date 402 by the charging component 120, and whichever cells should undergo no charging (as indicated by the cell allocation determination 306) can be not charged at the current time/date 402 by the charging component 120.

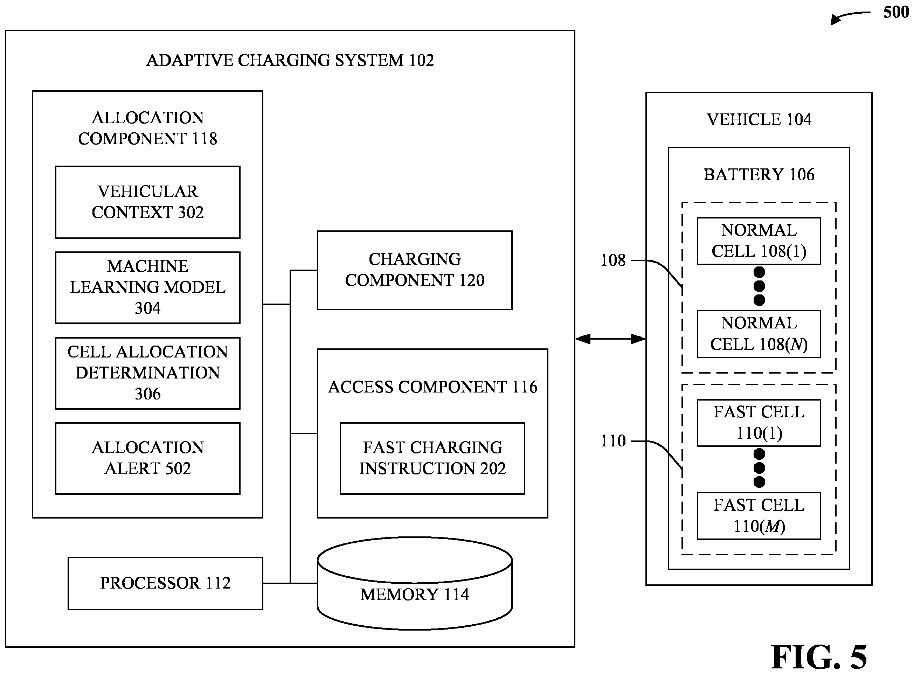

FIG. 5 illustrates a block diagram of an example, non-limiting system 500 including an allocation alert that can facilitate adaptive fast charging of vehicular batteries in accordance with one or more embodiments described herein. As shown, the system 500 can, in some cases, comprise the same components as the system 300, and can further comprise an allocation alert 502.

In various embodiments, the allocation component 118 can electronically generate the allocation alert 502, in response to the cell allocation determination 306 indicating that any of the set of normal cells 108 should be fast charged. In various aspects, the allocation alert 502 can be any suitable electronic data that specifies or otherwise warns that at least one of the set of normal cells has been allocated for fast charging at the current time/date 402. In various instances, the allocation component 118 can transmit the allocation alert 502 to any suitable computing device. In various other instances, the allocation component 118 can visually render the allocation alert 502 on any suitable electronic display (e.g., on a computer screen of the vehicle 104, or on a computer screen of the vehicular charging station at which the vehicle 104 is docked). Accordingly, an operator of the vehicle 104 can become aware that at least one of the set of normal cells 108 has been allocated for fast charging. In some cases, after transmitting or rendering the allocation alert 502, the allocation component 118 can prohibit the charging component 120 from charging the battery 106 in accordance with the cell allocation determination 306, until after a confirmation message is received from the vehicle 104 (e.g., until after an operator of the vehicle 104 confirms that such charging should be performed notwithstanding the allocation alert 502).

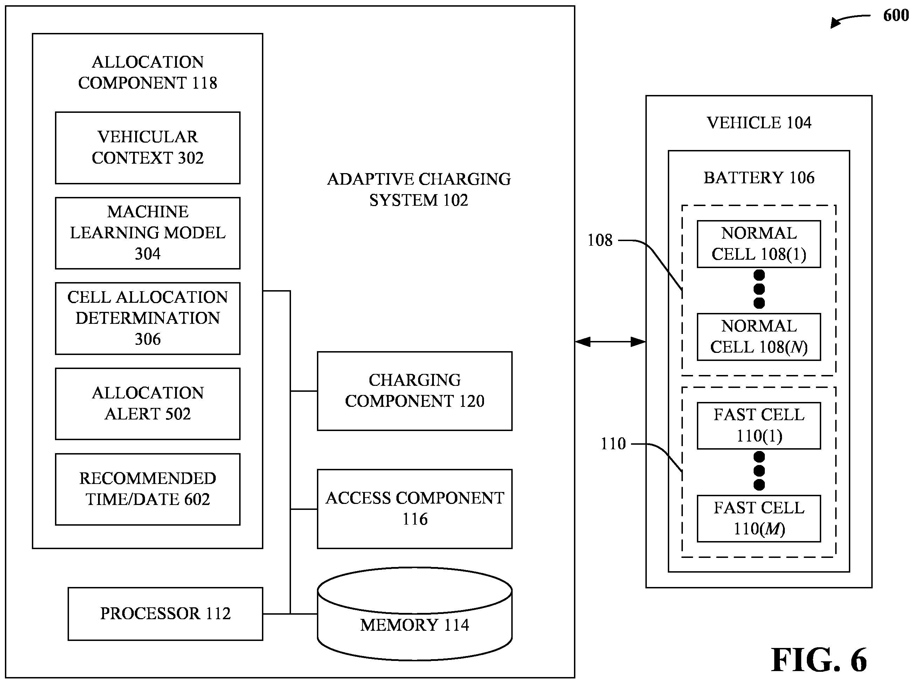

FIG. 6 illustrates a block diagram of an example, non-limiting system 600 including a recommended time or date that can facilitate adaptive fast charging of vehicular batteries in accordance with one or more embodiments described herein. As shown, the system 600 can, in some cases, comprise the same components as the system 500 except for the fast charging instruction 202, and can further comprise a recommended time/date 602.

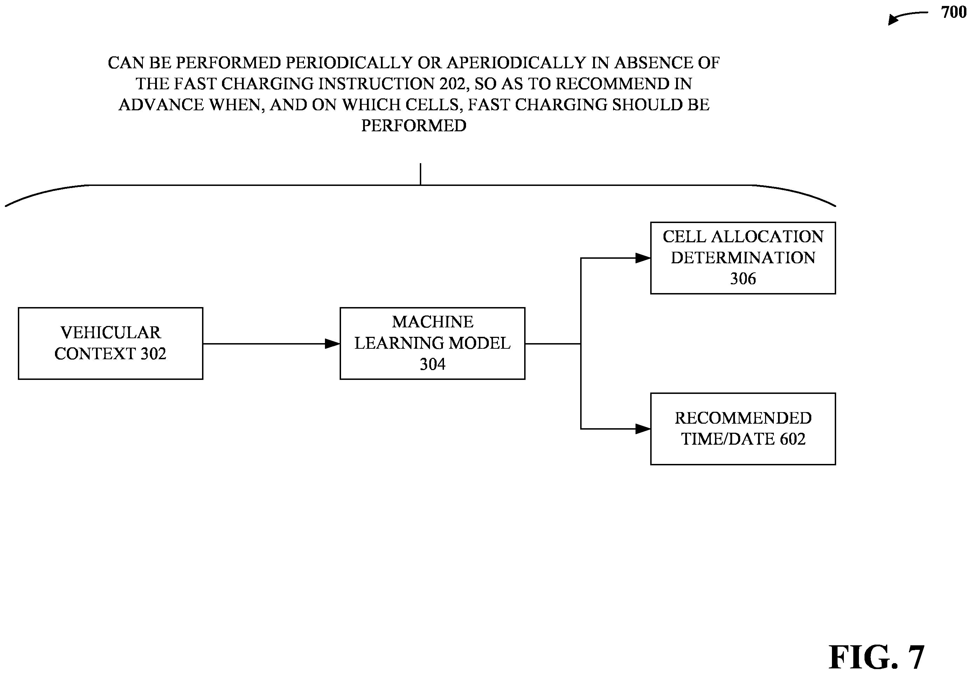

In various embodiments, it can be the case that the vehicle 104 is not docked at the vehicular charging station governed by the charging component 120 at the current time/date 402. In such situations, the fast charging instruction 202 can be absent and the charging component 120 can be unable to cause the battery 106 to be charged. In such situations, the machine learning model 304 can be configured to produce not only the cell allocation determination 306, but also the recommended time/date 602. In various instances, the recommended time/date 602 can be a future time or date at which the cell allocation determination 306 should be implemented. Non-limiting aspects are described with respect to FIG. 7.

FIG. 7 illustrates an example, non-limiting block diagram 700 showing how the machine learning model 304 can generate the cell allocation determination 306 and the recommended time/date 602 in accordance with one or more embodiments described herein.

In various embodiments, the allocation component 118 can execute the machine learning model 304 on the vehicular context 302. In various aspects, such execution can cause the machine learning model 304 to produce not only the cell allocation determination 306, but also the recommended time/date 602. As a non-limiting example, the allocation component 118 can feed the vehicular context 302 (e.g., the current time/date 402, the current battery health report 404, the driving history 406, the current destination/route 408, the current weather forecast 410, the one or more upcoming scheduled events 412, the one or more current vehicle sensor measurements 414) to an input layer of the machine learning model 304. In various instances, the vehicular context 302 can complete a forward pass through one or more hidden layers of the machine learning model 304. In various cases, an output layer of the machine learning model 304 can compute both the cell allocation determination 306 and the recommended time/date 602, based on activation maps or intermediate features produced by the one or more hidden layers of the machine learning model 304.

In any case, the recommended time/date 602 can be any suitable time or date that is in the future (e.g., that is after the current time/date 402) and at which the machine learning model 304 recommends that the battery 106 be charged in accordance with the cell allocation determination 306. In other words, the machine learning model 304 can be configured to determine not just which individual cells of the battery 106 should undergo fast charging, normal charging, or no charging given the vehicular context 302, but also to predict a future time or date at which performance of such charging would be appropriate or convenient in light of the vehicular context 302.

In various aspects, the allocation component 118 can electronically transmit the cell allocation determination 306 and the recommended time/date 602 to any suitable computing device (e.g., to the vehicle 104), or can electronically render the cell allocation determination 306 and the recommended time/date 602 on any suitable electronic display (e.g., a computer screen of the vehicle 104). Thus, an operator of the vehicle 104 can become aware not just of which specific cells are recommended to undergo fast charging (or normal charging, or no charging), but also of when such charging should be performed.

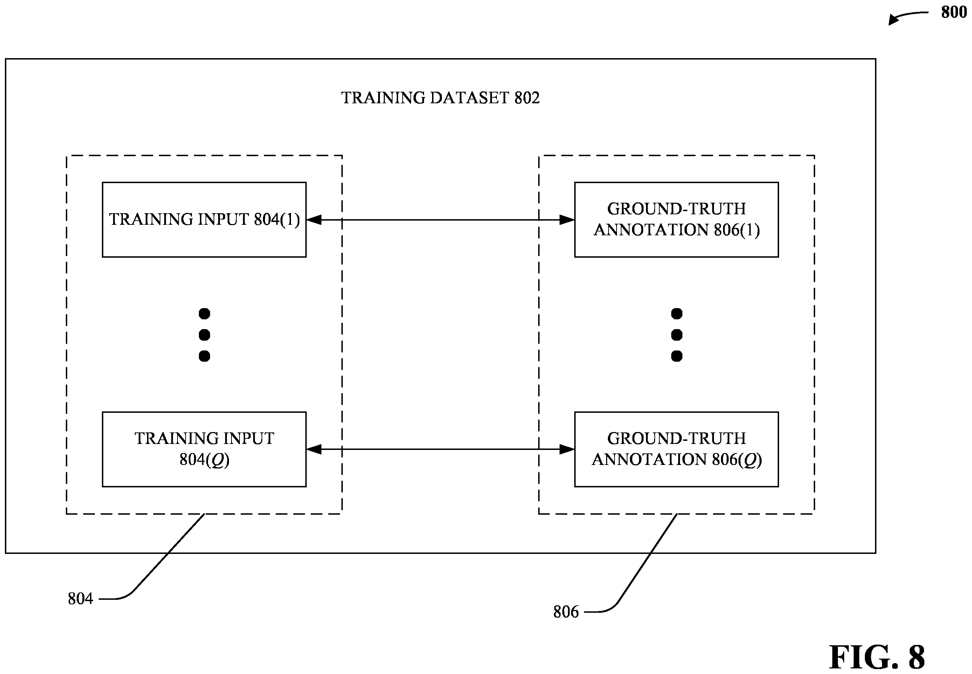

Now, in order for the cell allocation determination 306 (or the recommended time/date 602, as applicable) to be accurate, the machine learning model 304 can first undergo training. As a non-limiting example, the machine learning model 304 can undergo supervised training, as described with respect to FIGs. 8-9.

FIG. 8 illustrates an example, non-limiting block diagram 800 of a training dataset 802 that can be used to train the machine learning model 304 in accordance with one or more embodiments described herein.

In various aspects, the training dataset 802 can comprise a set of training inputs 804. In various instances, the set of training inputs 804 can include *q* inputs for any suitable positive integer *q*: a training input 804(1) to a training input 804(*q*). In various instances, each of the set of training inputs 804 can be a training vehicular context having the same format, size, or dimensionality as the vehicular context 302.

In various aspects, the training dataset 802 can comprise a set of ground-truth annotations 806 that can respectively correspond to the set of training inputs 804. Accordingly, since the set of training inputs 804 can have *q* inputs, the set of ground-truth annotations 806 can have *q* annotations: a ground-truth annotation 806(1) to a ground-truth annotation 806(*q*). In various instances, if the machine learning model 304 is not configured to produce the recommended time/date 602, then each of the set of ground-truth annotations 806 can be a correct or accurate cell allocation determination (having the same format, size, or dimensionality as the cell allocation determination 306) that is known or deemed to correspond to a respective one of the set of training inputs 804. On the other hand, if the machine learning model 304 is configured to produce the recommended time/date 602, then each of the set of ground-truth annotations 806 can be a concatenation between a correct or accurate cell allocation determination (having the same format, size, or dimensionality as the cell allocation determination 306) that is known or deemed to correspond to a respective one of the set of training inputs 804 and a correct or accurate recommended time/date (having the same format, size, or dimensionality as the recommended time/date 602) that is known or deemed to correspond to such correct or accurate cell allocation determination.

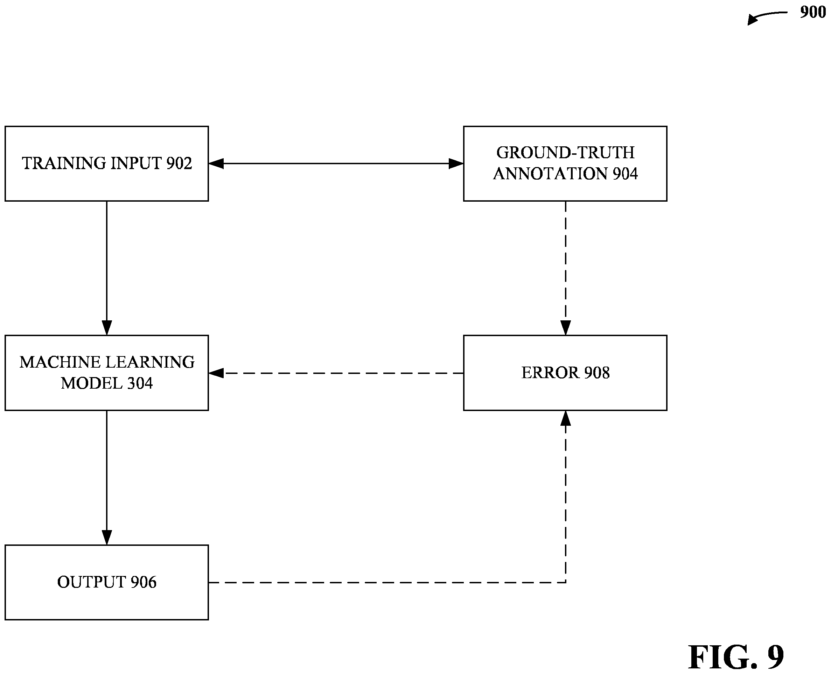

FIG. 9 illustrates an example, non-limiting block diagram 900 showing how the machine learning model 304 can be trained in accordance with one or more embodiments described herein.

In various aspects, prior to beginning training, trainable internal parameters (e.g., convolutional kernels, weight matrices, bias values) of the machine learning model 304 can be initialized in any suitable fashion (e.g., via random initialization).

In various aspects, a training input 902 and a ground-truth annotation 904 corresponding to the training input 902 can be selected from the training dataset 802. In various instances, the machine learning model 304 can be executed on the training input 902, thereby causing the machine learning model 304 to produce an output 906. More specifically, in some cases, an input layer of the machine learning model 304 can receive the training input 902, the training input 902 can complete a forward pass through one or more hidden layers of the machine learning model 304, and an output layer of the machine learning model 304 can compute the output 906 based on activation maps or intermediate features provided by the one or more hidden layers of the machine learning model 304.

Note that the format, size, or dimensionality of the output 906 can be dictated by the number, arrangement, sizes, or other characteristics of the neurons, convolutional kernels, or other internal parameters of the output layer (or of any other layers) of the machine learning model 304. Accordingly, the output 906 can be forced to have any desired format, size, or dimensionality, by adding, removing, or otherwise adjusting characteristics of the output layer (or of any other layers) of the machine learning model 304.

In various aspects, the output 906 can be considered as the predicted or inferred cell allocation determination (and the predicted or inferred recommended time/date, if so configured) that the machine learning model 304 believes should correspond to the training input 902. On the other hand, the ground-truth annotation 904 can be considered as whatever correct or accurate cell allocation determination (and the correct or accurate recommended time/date, if so configured) that is known or deemed to correspond to the training input 902. Note that, if the machine learning model 304 has so far undergone no or little training, then the output 906 can be highly inaccurate. In other words, the output 906 can be very different from the ground-truth annotation 904.

In various aspects, an error 908 (e.g., mean absolute error, mean squared error, cross-entropy error) between the output 906 and the ground-truth annotation 904 can be computed. In various instances, the trainable internal parameters of the machine learning model 304 can be incrementally updated, via backpropagation (e.g., stochastic gradient descent), based on the error 908.

In various cases, such execution-and-update procedure can be repeated for any suitable number of training inputs (e.g., for each training input in the training dataset 802). This can ultimately cause the trainable internal parameters of the machine learning model 304 to become iteratively optimized for accurately generating cell allocation determinations (or recommended times/dates, as appropriate). In various aspects, any suitable training batch sizes, any suitable error/loss functions, or any suitable training termination criteria can be implemented.

Although the above description mainly describes the machine learning model 304 as being trained in supervised fashion, this is a mere non-limiting example for ease of illustration and explanation. In various cases, any other suitable training paradigms (e.g., unsupervised training, reinforcement learning) can be implemented to train the machine learning model 304.

Although the herein disclosure mainly describes various embodiments in which the battery 106 comprises discrete battery cells (e.g., 108 and 110) that can be independently fast charged or normal charged, this is a mere non-limiting example for ease of explanation and illustration. In various other embodiments, it is possible for the battery 106 to lack discretely-identifiable battery cells but to nevertheless have independently-controllable portions (which may be amorphous) that can be independently fast charged or normal charged. It is to be understood and appreciated that various aspects described herein are equally applicable to embodiments having such independently-controllable portions as they are to embodiments having discrete battery cells.

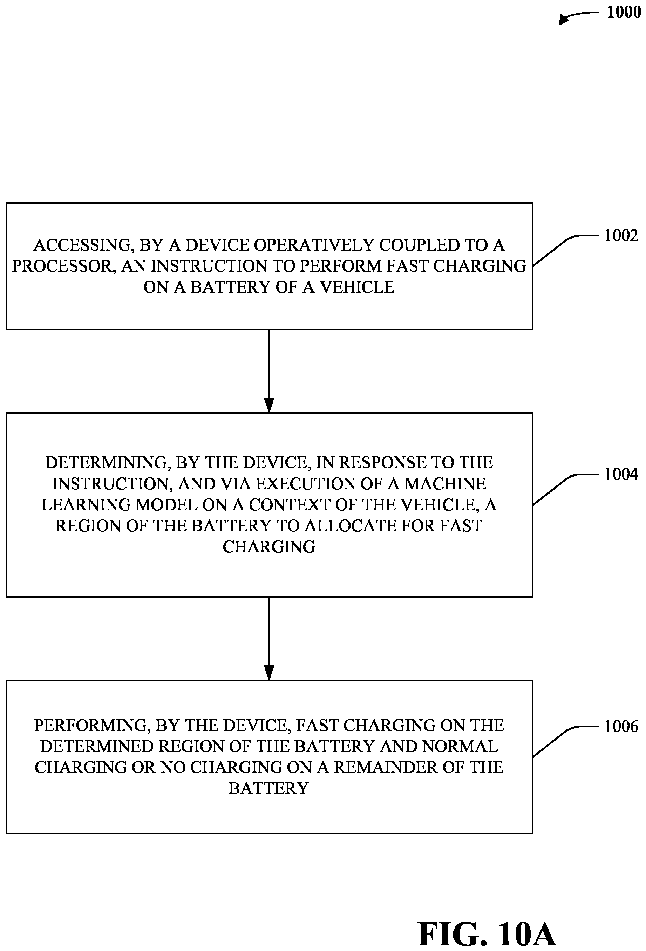

FIG. 10A illustrates a flow diagram of an example, non-limiting computer-implemented method 1000 that can facilitate adaptive fast charging of vehicular batteries in accordance with one or more embodiments described herein. In various cases, the adaptive charging system 102 can facilitate the computer-implemented method 1000.

In various embodiments, act 1002 can include accessing, by a device (e.g., via 116) operatively coupled to a processor (e.g., 112), an instruction (e.g., 202) to perform fast charging on a battery (e.g., 106) of a vehicle (e.g., 104).

In various aspects, act 1004 can include determining, by the device (e.g., via 118), in response to the instruction, and via execution of a machine learning model (e.g., 304) on a context (e.g., 302) of the vehicle, a region of the battery to allocate for fast charging (e.g., as indicated by 306).

In various instances, act 1006 can include performing, by the device (e.g., via 120), fast charging on the determined region of the battery (e.g., whichever cells are allocated for fasting charging as indicated by 306) and normal charging on a remainder of the battery (e.g., whichever cells are not allocated for fast charging as indicated by 306).

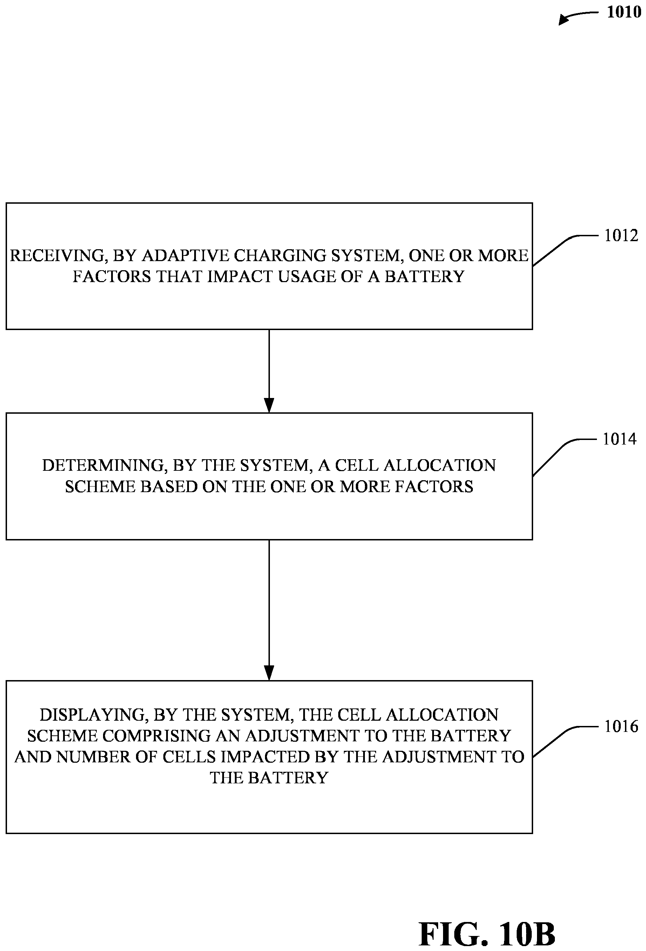

FIG. 10B illustrates a flow diagram of an example, non-limiting computer-implemented method 1010 that can facilitate adaptive fast charging of vehicular batteries in accordance with one or more embodiments described herein. In various cases, the adaptive charging system 102 can facilitate the computer-implemented method 1010.

In various embodiments, act 1012 can include receiving, by adaptive charging system, one or more factors that impact usage of a battery. In various aspects, act 1014 can include determining, by the system, a cell allocation scheme based on the one or more factors. In various instances, act 1016 can include displaying, by the system, the cell allocation scheme comprising an adjustment to the battery and number of cells impacted by the adjustment to the battery.

Although not explicitly shown in FIGs. 10A and 10B, the context of the vehicle can comprise: current health data (e.g., 404) of the battery; a driving history (e.g., 406) of the vehicle; a currently planned destination or route (e.g., 408) of the vehicle; a current weather forecast (e.g., 410) associated with the currently planned destination or route; an upcoming event (e.g., 412) noted in an electronic calendar of the vehicle; a current weight (e.g., 414) of the vehicle; current tire pressures (e.g., 414) of the vehicle; or current thermal fluid temperatures (e.g., 414) of the vehicle.

Although not explicitly shown in FIGs. 10A and 10B, the battery can comprise one or more first cells (e.g., 110) that are configured to handle fast charging without expedited degradation and one or more second cells (e.g., 108) that are not configured to handle fast charging without expedited degradation, and the computer-implemented method 1000 can further comprise: generating, by the device (e.g., via 118), an alert (e.g., 502) in response to the determined region comprising any of the one or more second cells.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) = *confidence*(*class*)*.* Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

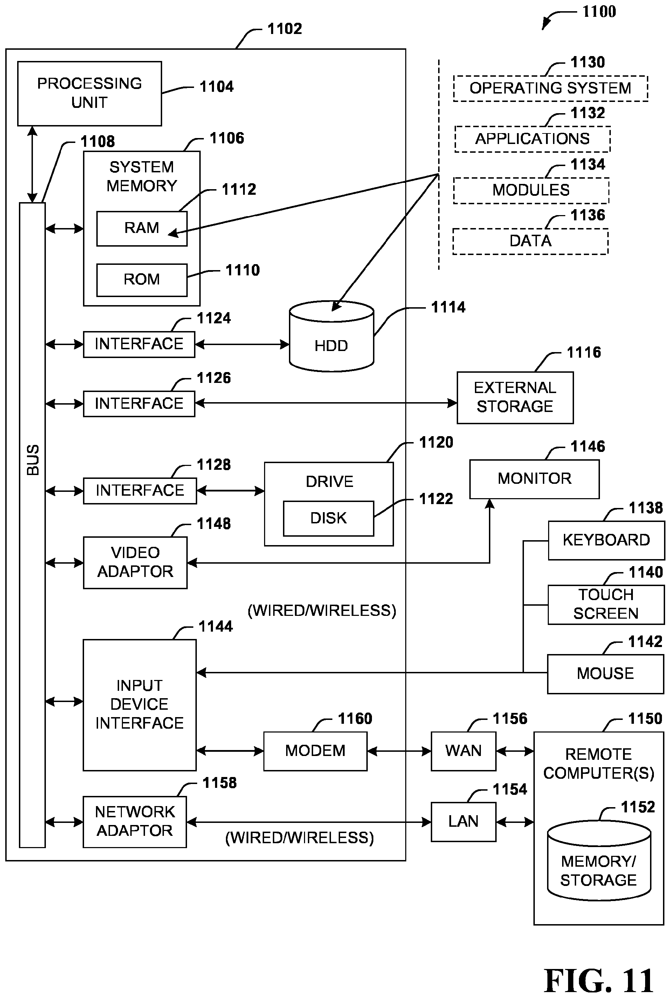

In order to provide additional context for various embodiments described herein, FIG. 11 and the following discussion are intended to provide a brief, general description of a suitable computing environment 1100 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11, the example environment 1100 for implementing various embodiments of the aspects described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a high-speed RAM such as static RAM for caching data.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and a drive 1120, e.g., such as a solid state drive, an optical disk drive, which can read or write from a disk 1122, such as a CD-ROM disc, a DVD, a BD, etc. Alternatively, where a solid state drive is involved, disk 1122 would not be included, unless separate. While the internal HDD 1114 is illustrated as located within the computer 1102, the internal HDD 1114 can also be configured for external use in a suitable chassis (not shown). Additionally, while not shown in environment 1100, a solid state drive (SSD) could be used in addition to, or in place of, an HDD 1114. The HDD 1114, external storage device(s) 1116 and drive 1120 can be connected to the system bus 1108 by an HDD interface 1124, an external storage interface 1126 and a drive interface 1128, respectively. The interface 1124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the.NET framework, for applications 1132. Runtime environments are consistent execution environments that allow applications 1132 to run on any operating system that includes the runtime environment. Similarly, operating system 1130 can support containers, and applications 1132 can be in the form of containers, which are lightweight, standalone, executable packages of software that include, e.g., code, runtime, system tools, system libraries and settings for an application.

Further, computer 1102 can be enable with a security module, such as a trusted processing module (TPM). For instance with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen 1140, and a pointing device, such as a mouse 1142. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 1394 serial port, a game port, a USB port, an IR interface, a BLUETOOTH^{®} interface, etc.

A monitor 1146 or other type of display device can be also connected to the system bus 1108 via an interface, such as a video adapter 1148. In addition to the monitor 1146, a computer typically includes other peripheral output devices (not shown), such as speakers, printers, etc.

The computer 1102 can operate in a networked environment using logical connections via wired or wireless communications to one or more remote computers, such as a remote computer(s) 1150. The remote computer(s) 1150 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1152 is illustrated. The logical connections depicted include wired/wireless connectivity to a local area network (LAN) 1154 or larger networks, e.g., a wide area network (WAN) 1156. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1154 through a wired or wireless communication network interface or adapter 1158. The adapter 1158 can facilitate wired or wireless communication to the LAN 1154, which can also include a wireless access point (AP) disposed thereon for communicating with the adapter 1158 in a wireless mode.

When used in a WAN networking environment, the computer 1102 can include a modem 1160 or can be connected to a communications server on the WAN 1156 via other means for establishing communications over the WAN 1156, such as by way of the Internet. The modem 1160, which can be internal or external and a wired or wireless device, can be connected to the system bus 1108 via the input device interface 1144. In a networked environment, program modules depicted relative to the computer 1102 or portions thereof, can be stored in the remote memory/storage device 1152. It will be appreciated that the network connections shown are example and other means of establishing a communications link between the computers can be used.

When used in either a LAN or WAN networking environment, the computer 1102 can access cloud storage systems or other network-based storage systems in addition to, or in place of, external storage devices 1116 as described above, such as but not limited to a network virtual machine providing one or more aspects of storage or processing of information. Generally, a connection between the computer 1102 and a cloud storage system can be established over a LAN 1154 or WAN 1156 e.g., by the adapter 1158 or modem 1160, respectively. Upon connecting the computer 1102 to an associated cloud storage system, the external storage interface 1126 can, with the aid of the adapter 1158 or modem 1160, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

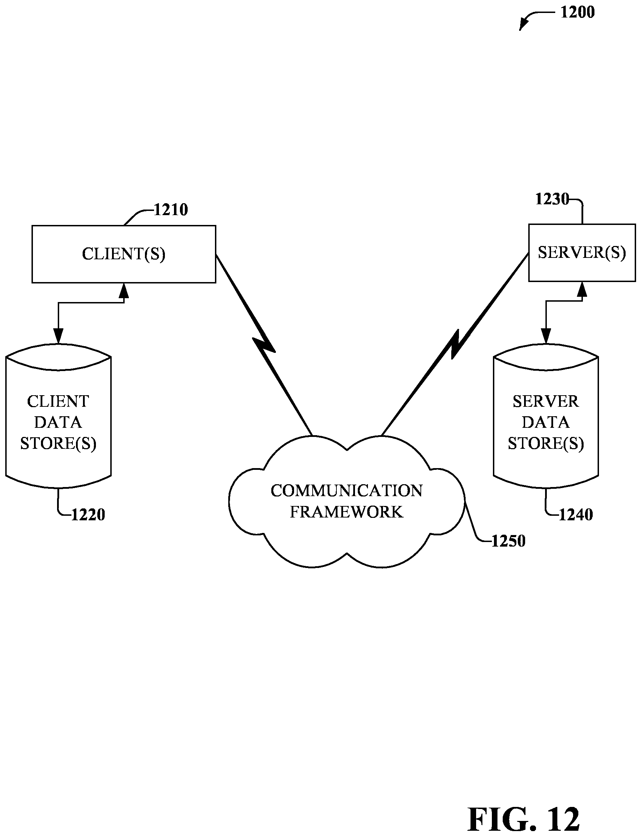

FIG. 12 is a schematic block diagram of a sample computing environment 1200 with which the disclosed subject matter can interact. The sample computing environment 1200 includes one or more client(s) 1210. The client(s) 1210 can be hardware or software (e.g., threads, processes, computing devices). The sample computing environment 1200 also includes one or more server(s) 1230. The server(s) 1230 can also be hardware or software (e.g., threads, processes, computing devices). The servers 1230 can house threads to perform transformations by employing one or more embodiments as described herein, for example. One possible communication between a client 1210 and a server 1230 can be in the form of a data packet adapted to be transmitted between two or more computer processes. The sample computing environment 1200 includes a communication framework 1250 that can be employed to facilitate communications between the client(s) 1210 and the server(s) 1230. The client(s) 1210 are operably connected to one or more client data store(s) 1220 that can be employed to store information local to the client(s) 1210. Similarly, the server(s) 1230 are operably connected to one or more server data store(s) 1240 that can be employed to store information local to the servers 1230.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.
1. A method, comprising: receiving, by adaptive charging system, one or more factors that impact usage of a battery; determining, by the system, a cell allocation scheme based on the one or more factors; and displaying, by the system, the cell allocation scheme comprising an adjustment to the battery and number of cells impacted by the adjustment to the battery.
2. The method of any preceding clause, wherein the one or more factors comprises a routing information for a desired route and desired driving mode.
3. The method of any preceding clause, wherein the one or more factors comprises an indication of weather impact on the battery, a driving distance value, a charging stations configuration for one or more charging stations associated with the desired route, a tire pressure value, and total weight of the car.
4. The method of any preceding clause, wherein the cell allocation scheme comprises number of fast cells and number of normal cells to use.
5. The method of any preceding clause, wherein the cell allocation scheme comprises identification of one or more cells to be swapped out.
6. The method of any preceding clause, further comprising: transmitting, by the system, the cell allocation scheme having identification of the fast cells.
7. The method of any preceding clause, further comprising: determining, by the system, adjustments to the drive mode, the routing information, and the tire pressure; and
   alerting, by the system, the user of the adjustments.
   In various cases, any suitable combination or sub-combinations of clauses 1 to 7 can be implemented.
8. A system, comprising: a memory that stores computer executable components; and a processor that executes the computer executable components stored in the memory, wherein the computer executable components comprise: an adaptive charging system that receives one or more factors that impact usage of a battery; a cell allocation determination component that, based on the one or more factors, determines a cell allocation scheme; and a display component that displays the cell allocation scheme comprising an adjustment to the battery and number of cells impacted by the adjustment to the battery.
9. The system of any preceding clause, wherein the one or more factors comprise a routing information for a desired route and desired driving mode.
10. The system of any preceding clause, wherein the one or more factors comprises an indication of weather impact on the battery, a driving distance value, a charging stations configuration for one or more charging stations associated with the desired route, a tire pressure value, and total weight of the car.
11. The system of any preceding clause, wherein the cell allocation scheme comprises number of fast cells and number of normal cells to use.
12. The system of any preceding clause, wherein the cell allocation scheme comprises identification of one or more cells to be swapped out.
13. The system of any preceding clause, wherein the computer executable components further comprise: a machine learning model that transmits the cell allocation scheme having identification of the fast cells.
14. The system of any preceding clause, wherein the adaptive charging system further determines adjustments to the drive mode, the routing information, and the tire pressure and alerts the user of the adjustments.
   In various cases, any suitable combination or sub-combinations of clauses 8 to 14 can be implemented.
15. A non-transitory machine-readable medium, comprising executable instructions that, when executed by a processor, facilitate performance of operations, comprising:
   receiving one or more factors that impact usage of a battery; determining a cell allocation scheme based on the one or more factors; and displaying the cell allocation scheme comprising an adjustment to the battery and number of cells impacted by the adjustment to the battery.
16. The non-transitory machine-readable medium of any preceding clause, wherein the one or more factors comprises a routing information for a desired route and desired driving mode.
17. The non-transitory machine-readable medium of any preceding clause, wherein the one or more factors comprises an indication of weather impact on the battery, a driving distance value, a charging stations configuration for one or more charging stations associated with the desired route, a tire pressure value, and total weight of the car.
18. The non-transitory machine-readable medium of any preceding clause, wherein the cell allocation scheme comprises number of fast cells and number of normal cells to use.
19. The non-transitory machine-readable medium of any preceding clause, wherein the cell allocation scheme comprises identification of one or more cells to be swapped out.
20. The non-transitory machine-readable medium of any preceding clause, further comprising: transmitting the cell allocation scheme having identification of the fast cells; determining adjustments to the drive mode, the routing information, and the tire pressure; and alerting the user of the adjustments.

In various cases, any suitable combination or sub-combinations of clauses 17 to 20 can be implemented.

In various cases, any suitable combination or sub-combinations of clauses 1 to 20 can be implemented.

## Claims

1. A method, comprising:
receiving, by adaptive charging system, one or more factors that impact usage of a battery;
determining, by the system, a cell allocation scheme based on the one or more factors; and
displaying, by the system, the cell allocation scheme comprising an adjustment to the battery and number of cells impacted by the adjustment to the battery.

2. The method of claim 1, wherein the one or more factors comprises a routing information for a desired route and desired driving mode.

3. The method of claim 1, wherein the one or more factors comprises an indication of weather impact on the battery, a driving distance value, a charging stations configuration for one or more charging stations associated with the desired route, a tire pressure value, and total weight of the car.

4. The method of claim 3, wherein the cell allocation scheme comprises number of fast cells and number of normal cells to use.

5. The method of claim 4, wherein the cell allocation scheme comprises identification of one or more cells to be swapped out.

6. The method of claim 1, further comprising:
transmitting, by the system, the cell allocation scheme having identification of the fast cells.

7. The method of claim 1, further comprising:
determining, by the system, adjustments to the drive mode, the routing information, and the tire pressure; and
alerting, by the system, the user of the adjustments.

8. A system, comprising:
a memory that stores computer executable components; and
a processor that executes the computer executable components stored in the memory, wherein the computer executable components comprise:
an adaptive charging system that receives one or more factors that impact usage of a battery;
a cell allocation determination component that, based on the one or more factors, determines a cell allocation scheme; and
a display component that displays the cell allocation scheme comprising an adjustment to the battery and number of cells impacted by the adjustment to the battery.

9. The system of claim 8, wherein the one or more factors comprise a routing information for a desired route and desired driving mode.

10. The system of claim 9, wherein the one or more factors comprises an indication of weather impact on the battery, a driving distance value, a charging stations configuration for one or more charging stations associated with the desired route, a tire pressure value, and total weight of the car.

11. The system of claim 8, wherein the cell allocation scheme comprises number of fast cells and number of normal cells to use.

12. The system of claim 11, wherein the cell allocation scheme comprises identification of one or more cells to be swapped out.

13. The system of claim 8, wherein the computer executable components further comprise:
a machine learning model that transmits the cell allocation scheme having identification of the fast cells.

14. A non-transitory machine-readable medium, comprising executable instructions that, when executed by a processor, facilitate performance of operations, comprising:
receiving one or more factors that impact usage of a battery;
determining a cell allocation scheme based on the one or more factors; and
displaying the cell allocation scheme comprising an adjustment to the battery and number of cells impacted by the adjustment to the battery.

15. The non-transitory machine-readable medium of claim 14, further comprising:
transmitting the cell allocation scheme having identification of the fast cells;
determining adjustments to the drive mode, a routing information, and a tire pressure; and
alerting the user of the adjustments.
